# EUROPEAN PATENT APPLICATION

(11) **EP 4 601 353 A1**
(43) Date of publication of application: **13.08.2025**
(21) Application number: 22963073.6
(22) Date of filing: 27.10.2022
(51) Int. Cl.: H04W 28/02, H04W 72/12

(54) **COMMUNICATION METHOD AND APPARATUS**

(71) Applicant: Huawei Technologies Co., Ltd., Shenzhen, Guangdong 518129 (CN)
(72) Inventor: DONG, Lei, Shenzhen, Guangdong 518129 (CN); TANG, Hao, Shenzhen, Guangdong 518129 (CN); ZHANG, Liqing, Shenzhen, Guangdong 518129 (CN); MA, Jianglei, Shenzhen, Guangdong 518129 (CN)
(74) Representative: MERH-IP Matias Erny Reichl Hoffmann Patentanwälte PartG mbB
(86) International application number: PCT/CN2022/127904
(87) International publication number: WO 2024/087089

(57) **Abstract**

This application discloses a communication method and apparatus. The method includes: After sending first indication information to a network device, a terminal device may receive second indication information from the network device. The first indication information is used to determine at least one data type, and the at least one data type is a data type of the terminal device. The second indication information indicates the terminal device whether to send data corresponding to the at least one data type. According to the method, the terminal device may process, under an indication of the network device, the data corresponding to the at least one data type, to improve data processing effectiveness.

## Description

### TECHNICAL FIELD

This application relates to the field of communication technologies, and in particular, to a communication method and apparatus.

### BACKGROUND

With development of technologies, convergence of a communication network, a sensing network, and a computing power network becomes one of dominant trends of mobile communication technologies (for example, a 6th generation (6th generation, 6G) mobile communication technology). In a narrow sense, the sensing network is a system that has capabilities such as target positioning (for example, ranging, speed measurement, and angle measurement), target imaging, target detection, target tracking, and target recognition. In a broad sense, the sensing network is a system that can sense attributes and statuses of all services, networks, users, terminal devices, and environmental objects.

When the communication network, the sensing network, and the computing power network are converged, data types in a mobile communication system also increase. For example, the terminal device may have core network data, may have data sensed by the terminal device, and may have data or a parameter of an AI model that is calculated by the terminal device according to an artificial intelligence (artificial intelligence, AI) algorithm. How to process the data in the terminal device is a problem that needs to be resolved.

### SUMMARY

This application provides a communication method and apparatus, to process data in a terminal device.

According to a first aspect, an embodiment of this application provides a communication method. The method includes: A terminal device may send first indication information to a network device. The first indication information may be used to determine at least one data type, and the at least one data type is a data type of the terminal device. Then, the terminal device may receive second indication information from the network device, where the second indication information indicates the terminal device whether to send data corresponding to the at least one data type.

According to the method, after sending, to the network device, the first indication information used to determine the at least one data type, the terminal device may receive the second indication information from the network device, where the second indication information indicates the terminal device whether to send the data corresponding to the at least one data type. In this way, the terminal device may process, under an indication of the network device, the data corresponding to at least one data type, to improve data processing effectiveness.

In a possible design, the terminal device may send the first indication information to the network device by using a MAC-CE, UCI, or RRC signaling. The MAC-CE may be a BSR or another message. The following uses an example in which the terminal device sends the first indication information to the terminal device by using the BSR for description.

Optionally, the terminal device may send the first indication information to the network device in one of the following manners.

Implementation 1: The terminal device sends a BSR to the network device. The BSR includes the first indication information, the first indication information includes the at least one data type, and the at least one data type corresponds to at least one logical channel group. In other words, the BSR may include the at least one data type, and the at least one data type corresponds to the at least one logical channel group.

In the implementation 1, the terminal device may indicate a data type of the terminal device by using the at least one data type in the BSR. This is easy to implement. In addition, the at least one data type corresponds to a logical channel group, so that the network device can determine a data type corresponding to the logical channel group, and schedule an uplink resource based on the data type, thereby improving effectiveness of data scheduling and data transmission.

In the implementation 1, the at least one data type may correspond to the at least one logical channel group in one of the following manners.

Manner 1: A first data type is any one of at least one data type, and the first data type corresponds to one or more of the at least one logical channel group. In other words, each of the at least one data type corresponds to one or more of the at least one logical channel group. In Manner 1, the data type corresponding to the at least one logical channel group may be indicated by using a small quantity of data types, so that a quantity of bits occupied by the at least one data type can be reduced.

Manner 2: A second data type is any one of the at least one data type, the second data type is a data type corresponding to a first logical channel, the first logical channel belongs to a first logical channel group, and the first logical channel group is one of the at least one logical channel group. In Manner 2, for each of the at least one logical channel group, the terminal device may indicate a data type corresponding to each logical channel in the logical channel group. In Manner 2, the data type corresponding to each logical channel in each logical channel group can be accurately indicated, thereby improving accuracy of indicating the data type.

Implementation 2: The terminal device sends a BSR to the network device. The BSR includes the first indication information, the first indication information includes the at least one data type, and the at least one data type corresponds to at least one logical channel. In other words, the BSR includes the at least one data type, and the at least one data type corresponds to the at least one logical channel.

Optionally, a third data type is any one of the at least one data type, and the third data type corresponds to one or more of the at least one logical channel.

In the implementation 2, the terminal device may indicate a data type of the terminal device by using the at least one data type in the BSR. This is easy to implement. In addition, the at least one data type corresponds to a logical channel, so that the network device can determine a data type corresponding to the logical channel, and schedule an uplink resource based on the data type, thereby improving effectiveness of data scheduling and data transmission.

Implementation 3: The terminal device sends a BSR to the network device. The BSR includes the first indication information, the first indication information includes indication information of at least one logical channel group, and the at least one logical channel group corresponds to the at least one data type. In other words, the BSR includes the indication information of the at least one logical channel group, and the at least one logical channel group corresponds to the at least one data type.

Optionally, a second logical channel group is any one of the at least one logical channel group. Configuration information of a logical channel in the second logical channel group includes a fourth data type, or configuration information of the second logical channel group includes a fourth data type, where the fourth data type is a data type that is in the at least one data type and that corresponds to the second logical channel group.

In the implementation 3, the terminal device may indirectly indicate a data type of the terminal device by using the indication information of the logical channel group in the BSR, and does not need to additionally send a data type identifier, thereby reducing overheads.

Implementation 4: The terminal device sends a BSR to the network device. The BSR includes the first indication information, the first indication information includes indication information of at least one logical channel, and the at least one logical channel corresponds to the at least one data type. In other words, the BSR includes the indication information of the at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

In this implementation, the terminal device may indirectly indicate a data type of the terminal device by using the indication information of the logical channel in the BSR, and does not need to additionally send a data type identifier, thereby reducing overheads.

In a possible design, the second indication information is a bitmap. The terminal device may determine, based on the bitmap, whether to send the data corresponding to the at least one data type. According to this design, the network device can accurately indicate the terminal device whether to send the data corresponding to the at least one data type.

In a possible design, a quantity of bits included in the bitmap is the same as a quantity of the at least one data type; or a quantity of bits included in the bitmap is the same as a quantity of data types included in a first data type set, and the first data type set is preconfigured or indicated by the network device. According to this design, the quantity of bits included in the bitmap can be flexibly set.

In a possible design, the terminal device may determine, based on a value of a first bit, to send data corresponding to a sixth data type, or discard the data corresponding to the sixth data type. The first bit is any bit in the bitmap, and the sixth data type is a data type corresponding to the first bit in the at least one data type. According to this design, the network device can accurately indicate the terminal device whether to send the data corresponding to each of the at least one data type.

In a possible design, if the terminal device determines, based on the value of the first bit, to discard the data corresponding to the sixth data type, the terminal device may exclude the data corresponding to the sixth data type when logical channel multiplexing is performed on the data. According to this design, when the network device indicates to discard the data corresponding to the sixth data type, the terminal device does not need to perform logical channel multiplexing on the data corresponding to the sixth data type, so that overheads required by the terminal device to perform logical channel multiplexing can be reduced, and time required by the terminal device to send data can be reduced.

According to a second aspect, an embodiment of this application provides a communication method. The method includes: A network device may receive first indication information from a terminal device. The first indication information is used to determine at least one data type, and the at least one data type is a data type of the terminal device. Then, the network device may send second indication information to the terminal device, where the second indication information indicates the terminal device whether to send data corresponding to the at least one data type.

According to the method, after receiving, from the terminal device, the first indication information used to determine the at least one data type, the network device sends the second indication information to the terminal device, where the second indication information indicates the terminal device whether to send the data corresponding to the at least one data type. In this way, the terminal device may process, under an indication of the network device, the data corresponding to at least one data type, to improve data processing effectiveness.

In a possible design, the network device may receive the first indication information from the terminal device by using a MAC-CE, UCI, or RRC signaling. The MAC-CE may be a BSR or another message. The following uses an example in which the network device receives the first indication information from the terminal device by using the BSR for description.

Optionally, the network device may receive the first indication information from the terminal device in one of the following manners.

Implementation 1: The network device receives a BSR from the terminal device. The BSR includes the first indication information, the first indication information includes the at least one data type, and the at least one data type corresponds to at least one logical channel group. In other words, the BSR may include the at least one data type, and the at least one data type corresponds to the at least one logical channel group.

In the implementation 1, the terminal device may indicate a data type of the terminal device by using the at least one data type in the BSR. This is easy to implement. In addition, the at least one data type corresponds to a logical channel group, so that the network device can determine a data type corresponding to the logical channel group, and schedule an uplink resource based on the data type, thereby improving effectiveness of data scheduling and data transmission.

In the implementation 1, the at least one data type may correspond to the at least one logical channel group in one of the following manners.

Manner 1: A first data type is any one of at least one data type, and the first data type corresponds to one or more of the at least one logical channel group. In other words, each of the at least one data type corresponds to one or more of the at least one logical channel group. In Manner 1, the data type corresponding to the at least one logical channel group may be indicated by using a small quantity of data types, so that a quantity of bits occupied by the at least one data type can be reduced.

Manner 2: A second data type is any one of the at least one data type, the second data type is a data type corresponding to a first logical channel, the first logical channel belongs to a first logical channel group, and the first logical channel group is one of the at least one logical channel group. In Manner 2, for each of the at least one logical channel group, the terminal device may indicate a data type corresponding to each logical channel in the logical channel group. In Manner 2, the data type corresponding to each logical channel in each logical channel group can be accurately indicated, thereby improving accuracy of indicating the data type.

Implementation 2: The network device receives a BSR from the terminal device. The BSR includes the first indication information, the first indication information includes the at least one data type, and the at least one data type corresponds to at least one logical channel. In other words, the BSR includes the at least one data type, and the at least one data type corresponds to the at least one logical channel.

Optionally, a third data type is any one of the at least one data type, and the third data type corresponds to one or more of the at least one logical channel.

In the implementation 2, the terminal device may indicate a data type of the terminal device by using the at least one data type in the BSR. This is easy to implement. In addition, the at least one data type corresponds to a logical channel, so that the network device can determine a data type corresponding to the logical channel, and schedule an uplink resource based on the data type, thereby improving effectiveness of data scheduling and data transmission.

Implementation 3: The network device receives a BSR from the terminal device. The BSR includes the first indication information, the first indication information includes indication information of at least one logical channel group, and the at least one logical channel group corresponds to the at least one data type. In other words, the BSR includes the indication information of the at least one logical channel group, and the at least one logical channel group corresponds to the at least one data type.

Optionally, a second logical channel group is any one of the at least one logical channel group. Configuration information of the logical channel in the second logical channel group includes a fourth data type, or configuration information of the second logical channel group includes a fourth data type. The fourth data type is a data type that is in the at least one data type and that corresponds to the second logical channel group.

In the implementation 3, the terminal device may indirectly indicate a data type of the terminal device by using the indication information of the logical channel group in the BSR, and does not need to additionally send a data type identifier, thereby reducing overheads.

Implementation 4: The network device receives a BSR from the terminal device. The BSR includes the first indication information, the first indication information includes indication information of at least one logical channel, and the at least one logical channel corresponds to the at least one data type. In other words, the BSR includes the indication information of the at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

In this implementation, the terminal device may indirectly indicate a data type of the terminal device by using the indication information of the logical channel in the BSR, and does not need to additionally send a data type identifier, thereby reducing overheads.

In a possible design, the second indication information is a bitmap. According to this design, the network device can accurately indicate the terminal device whether to send the data corresponding to the at least one data type.

In a possible design, a quantity of bits included in the bitmap is the same as a quantity of the at least one data type; or a quantity of bits included in the bitmap is the same as a quantity of data types included in a first data type set, and the first data type set is preconfigured or indicated by the network device. According to this design, the quantity of bits included in the bitmap can be flexibly set.

In a possible design, a value of a first bit may be used to determine to send the data corresponding to the sixth data type or discard the data corresponding to the sixth data type. The first bit is any bit in the bitmap, and the sixth data type is a data type corresponding to the first bit in the at least one data type. According to this design, the network device can accurately indicate the terminal device whether to send the data corresponding to each of the at least one data type.

In a possible design, the network device may determine, based on a life cycle of an artificial intelligence AI model and/or a communication quality monitoring result in the network device, whether to allow the terminal device to send the data corresponding to the at least one data type. According to this design, when the network device indicates to discard the data corresponding to the sixth data type, the network device may accurately determine whether the terminal device is allowed to send the data corresponding to each of the at least one data type, to prevent the terminal device from transmitting data corresponding to a data type when the network device does not need the data corresponding to the data type.

According to a third aspect, an embodiment of this application provides a communication method. The method includes: A terminal device may send first indication information to a network device. The first indication information may be used to determine at least one data type, and the at least one data type is a data type of the terminal device. According to the method, the terminal device may send, to the network device, the first indication information used to determine the at least one data type. In this way, the network device may process data from the terminal device based on the data type, to improve data processing effectiveness.

In a possible design, the terminal device may send the first indication information to the network device by using a MAC-CE, UCI, or RRC signaling. The MAC-CE may be a BSR or another message. The following uses an example in which the terminal device sends the first indication information to the terminal device by using the BSR for description.

Optionally, the terminal device may send the first indication information to the network device in one of the following manners.

Implementation 1: The terminal device sends a BSR to the network device. The BSR includes the first indication information, the first indication information includes the at least one data type, and the at least one data type corresponds to at least one logical channel group. In other words, the BSR may include the at least one data type, and the at least one data type corresponds to the at least one logical channel group.

In the implementation 1, the terminal device may indicate a data type of the terminal device by using the at least one data type in the BSR. This is easy to implement. In addition, the at least one data type corresponds to a logical channel group, so that the network device can determine a data type corresponding to the logical channel group, and schedule an uplink resource based on the data type, thereby improving effectiveness of data scheduling and data transmission.

In the implementation 1, the at least one data type may correspond to the at least one logical channel group in one of the following manners.

Manner 1: A first data type is any one of at least one data type, and the first data type corresponds to one or more of the at least one logical channel group. In other words, each of the at least one data type corresponds to one or more of the at least one logical channel group. In Manner 1, the data type corresponding to the at least one logical channel group may be indicated by using a small quantity of data types, so that a quantity of bits occupied by the at least one data type can be reduced.

Manner 2: A second data type is any one of the at least one data type, the second data type is a data type corresponding to a first logical channel, the first logical channel belongs to a first logical channel group, and the first logical channel group is one of the at least one logical channel group. In Manner 2, for each of the at least one logical channel group, the terminal device may indicate a data type corresponding to each logical channel in the logical channel group. In Manner 2, the data type corresponding to each logical channel in each logical channel group can be accurately indicated, thereby improving accuracy of indicating the data type.

Implementation 2: The terminal device sends a BSR to the network device. The BSR includes the first indication information, the first indication information includes the at least one data type, and the at least one data type corresponds to at least one logical channel. In other words, the BSR includes the at least one data type, and the at least one data type corresponds to the at least one logical channel.

Optionally, a third data type is any one of the at least one data type, and the third data type corresponds to one or more of the at least one logical channel.

In the implementation 2, the terminal device may indicate a data type of the terminal device by using the at least one data type in the BSR. This is easy to implement. In addition, the at least one data type corresponds to a logical channel, so that the network device can determine a data type corresponding to the logical channel, and schedule an uplink resource based on the data type, thereby improving effectiveness of data scheduling and data transmission.

Implementation 3: The terminal device sends a BSR to the network device. The BSR includes the first indication information, the first indication information includes indication information of at least one logical channel group, and the at least one logical channel group corresponds to the at least one data type. In other words, the BSR includes the indication information of the at least one logical channel group, and the at least one logical channel group corresponds to the at least one data type.

Optionally, a second logical channel group is any one of the at least one logical channel group. Configuration information of a logical channel in the second logical channel group includes a fourth data type, or configuration information of the second logical channel group includes a fourth data type, where the fourth data type is a data type that is in the at least one data type and that corresponds to the second logical channel group.

In the implementation 3, the terminal device may indirectly indicate a data type of the terminal device by using the indication information of the logical channel group in the BSR, and does not need to additionally send a data type identifier, thereby reducing overheads.

Implementation 4: The terminal device sends a BSR to the network device. The BSR includes the first indication information, the first indication information includes indication information of at least one logical channel, and the at least one logical channel corresponds to the at least one data type. In other words, the BSR includes the indication information of the at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

In this implementation, the terminal device may indirectly indicate a data type of the terminal device by using the indication information of the logical channel in the BSR, and does not need to additionally send a data type identifier, thereby reducing overheads.

According to a fourth aspect, an embodiment of this application provides a communication method. The method includes: A network device may receive first indication information from a terminal device. The first indication information is used to determine at least one data type, and the at least one data type is a data type of the terminal device. According to the method, the network device may receive, from the terminal device, the first indication information used to determine the at least one data type, to process data from the terminal device based on the data type, thereby improving data processing effectiveness.

In a possible design, the network device may receive the first indication information from the terminal device by using a MAC-CE, UCI, or RRC signaling. The MAC-CE may be a BSR or another message. The following uses an example in which the network device receives the first indication information from the terminal device by using the BSR for description.

Optionally, the network device may receive the first indication information from the terminal device in one of the following manners.

Implementation 1: The network device receives a BSR from the terminal device. The BSR includes the first indication information, the first indication information includes the at least one data type, and the at least one data type corresponds to at least one logical channel group. In other words, the BSR may include the at least one data type, and the at least one data type corresponds to the at least one logical channel group.

In the implementation 1, the terminal device may indicate a data type of the terminal device by using the at least one data type in the BSR. This is easy to implement. In addition, the at least one data type corresponds to a logical channel group, so that the network device can determine a data type corresponding to the logical channel group, and schedule an uplink resource based on the data type, thereby improving effectiveness of data scheduling and data transmission.

In the implementation 1, the at least one data type may correspond to the at least one logical channel group in one of the following manners.

Manner 1: A first data type is any one of at least one data type, and the first data type corresponds to one or more of the at least one logical channel group. In other words, each of the at least one data type corresponds to one or more of the at least one logical channel group. In Manner 1, the data type corresponding to the at least one logical channel group may be indicated by using a small quantity of data types, so that a quantity of bits occupied by the at least one data type can be reduced.

Manner 2: A second data type is any one of the at least one data type, the second data type is a data type corresponding to a first logical channel, the first logical channel belongs to a first logical channel group, and the first logical channel group is one of the at least one logical channel group. In Manner 2, for each of the at least one logical channel group, the terminal device may indicate a data type corresponding to each logical channel in the logical channel group. In Manner 2, the data type corresponding to each logical channel in each logical channel group can be accurately indicated, thereby improving accuracy of indicating the data type.

Implementation 2: The network device receives a BSR from the terminal device. The BSR includes the first indication information, the first indication information includes the at least one data type, and the at least one data type corresponds to at least one logical channel. In other words, the BSR includes the at least one data type, and the at least one data type corresponds to the at least one logical channel.

Optionally, a third data type is any one of the at least one data type, and the third data type corresponds to one or more of the at least one logical channel.

In the implementation 2, the terminal device may indicate a data type of the terminal device by using the at least one data type in the BSR. This is easy to implement. In addition, the at least one data type corresponds to a logical channel, so that the network device can determine a data type corresponding to the logical channel, and schedule an uplink resource based on the data type, thereby improving effectiveness of data scheduling and data transmission.

Implementation 3: The network device receives a BSR from the terminal device. The BSR includes the first indication information, the first indication information includes indication information of at least one logical channel group, and the at least one logical channel group corresponds to the at least one data type. In other words, the BSR includes the indication information of the at least one logical channel group, and the at least one logical channel group corresponds to the at least one data type.

Optionally, a second logical channel group is any one of the at least one logical channel group. Configuration information of the logical channel in the second logical channel group includes a fourth data type, or configuration information of the second logical channel group includes a fourth data type. The fourth data type is a data type that is in the at least one data type and that corresponds to the second logical channel group.

In the implementation 3, the terminal device may indirectly indicate a data type of the terminal device by using the indication information of the logical channel group in the BSR, and does not need to additionally send a data type identifier, thereby reducing overheads.

Implementation 4: The network device receives a BSR from the terminal device. The BSR includes the first indication information, the first indication information includes indication information of at least one logical channel, and the at least one logical channel corresponds to the at least one data type. In other words, the BSR includes the indication information of the at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

In this implementation, the terminal device may indirectly indicate a data type of the terminal device by using the indication information of the logical channel in the BSR, and does not need to additionally send a data type identifier, thereby reducing overheads.

According to a fifth aspect, an embodiment of this application provides a communication method. The method includes: A terminal device may receive second indication information from a network device, where the second indication information indicates the terminal device whether to send data corresponding to at least one data type.

Optionally, the at least one data type may be determined by the network device based on the first indication information from the terminal device, or may be a data type in a first data type set. The first data type set may be preconfigured or indicated by the network device.

According to the method, the terminal device may receive second indication information from the network device, where the second indication information indicates the terminal device whether to send data corresponding to the at least one data type. In this way, the terminal device may process, under an indication of the network device, the data corresponding to at least one data type, to improve data processing effectiveness.

In a possible design, the second indication information is a bitmap. The terminal device may determine, based on the bitmap, whether to send the data corresponding to the at least one data type. According to this design, the network device can accurately indicate the terminal device whether to send the data corresponding to the at least one data type.

In a possible design, a quantity of bits included in the bitmap is the same as a quantity of the at least one data type; or a quantity of bits included in the bitmap is the same as a quantity of data types included in a first data type set, and the first data type set is preconfigured or indicated by the network device. According to this design, the quantity of bits included in the bitmap can be flexibly set.

In a possible design, the terminal device may determine, based on a value of a first bit, to send data corresponding to a sixth data type, or discard the data corresponding to the sixth data type. The first bit is any bit in the bitmap, and the sixth data type is a data type corresponding to the first bit in the at least one data type. According to this design, the network device can accurately indicate the terminal device whether to send the data corresponding to each of the at least one data type.

In a possible design, if the terminal device determines, based on the value of the first bit, to discard the data corresponding to the sixth data type, the terminal device may exclude the data corresponding to the sixth data type when logical channel multiplexing is performed on the data. According to this design, when the network device indicates to discard the data corresponding to the sixth data type, the terminal device does not need to perform logical channel multiplexing on the data corresponding to the sixth data type, so that overheads required by the terminal device to perform logical channel multiplexing can be reduced, and time required by the terminal device to send data can be reduced.

According to a sixth aspect, an embodiment of this application provides a communication method. The method includes: A network device may send second indication information to a terminal device, where the second indication information indicates the terminal device whether to send data corresponding to at least one data type.

Optionally, the at least one data type may be determined by the network device based on the first indication information from the terminal device, or may be a data type in a first data type set. The first data type set may be preconfigured or indicated by the network device.

According to the method, the network device may send second indication information to the terminal device, where the second indication information indicates the terminal device whether to send data corresponding to the at least one data type. In this way, the terminal device may process, under an indication of the network device, the data corresponding to at least one data type, to improve data processing effectiveness.

In a possible design, the second indication information is a bitmap. According to this design, the network device can accurately indicate the terminal device whether to send the data corresponding to the at least one data type.

In a possible design, a quantity of bits included in the bitmap is the same as a quantity of the at least one data type; or a quantity of bits included in the bitmap is the same as a quantity of data types included in a first data type set, and the first data type set is preconfigured or indicated by the network device. According to this design, the quantity of bits included in the bitmap can be flexibly set.

In a possible design, a value of a first bit may be used to determine to send the data corresponding to the sixth data type or discard the data corresponding to the sixth data type. The first bit is any bit in the bitmap, and the sixth data type is a data type corresponding to the first bit in the at least one data type. According to this design, the network device can accurately indicate the terminal device whether to send the data corresponding to each of the at least one data type.

In a possible design, the network device may determine, based on a life cycle of an artificial intelligence AI model and/or a communication quality monitoring result in the network device, whether to allow the terminal device to send the data corresponding to the at least one data type. According to this design, when the network device indicates to discard the data corresponding to the sixth data type, the network device may accurately determine whether the terminal device is allowed to send the data corresponding to each of the at least one data type, to prevent the terminal device from transmitting data corresponding to a data type when the network device does not need the data corresponding to the data type.

According to a seventh aspect, an embodiment of this application provides a communication apparatus, including a unit configured to perform the steps in any one of the foregoing aspects.

According to an eighth aspect, an embodiment of this application provides a communication apparatus, including at least one processing element and at least one storage element. The at least one storage element is configured to store a program and data, and the at least one processing element is configured to read and execute the program and the data that are stored in the storage element, so that the method provided in any one of the foregoing aspects of this application is implemented.

According to a ninth aspect, an embodiment of this application provides a communication system, including a terminal device configured to perform the method provided in the first aspect and a network device configured to perform the method provided in the second aspect.

According to a tenth aspect, an embodiment of this application further provides a computer program. When the computer program is run on a computer, the computer is enabled to perform the method according to any one of the foregoing aspects.

According to an eleventh aspect, an embodiment of this application further provides a computer-readable storage medium. The computer-readable storage medium stores a computer program. When the computer program is executed by a computer, the computer is enabled to perform the method according to any one of the foregoing aspects.

According to a twelfth aspect, an embodiment of this application further provides a chip. The chip is configured to read a computer program stored in a memory, to perform the method according to any one of the foregoing aspects.

According to a thirteenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effect that can be achieved in any one of the seventh aspect to the thirteenth aspect, refer to descriptions of technical effect that can be achieved in any possible design of any one of the first aspect to the sixth aspect. Repeated parts are not described.

### BRIEF DESCRIPTION OF DRAWINGS

FIG. 1 is a diagram of an architecture of a communication system according to an embodiment of this application;
FIG. 2 is a flowchart of an uplink scheduling method according to an embodiment of this application;
FIG. 3 is a diagram of a buffer status report (buffer status report, BSR) according to an embodiment of this application;
FIG. 4A is a flowchart of a logical channel (logical channel, LC) multiplexing method according to an embodiment of this application;
FIG. 4B is a flowchart of a method for performing LC multiplexing based on an LC priority in an LC multiplexing method according to an embodiment of this application;
FIG. 5 is a flowchart of a communication method according to an embodiment of this application;
FIG. 6A is a diagram of an application scenario according to an embodiment of this application;
FIG. 6B is a diagram of a first BSR in a communication method according to an embodiment of this application;
FIG. 6C is a diagram of a second BSR in a communication method according to an embodiment of this application;
FIG. 6D is a diagram of a third BSR in a communication method according to an embodiment of this application;
FIG. 6E is a diagram of a fourth BSR in a communication method according to an embodiment of this application;
FIG. 6F is a diagram of a fifth BSR in a communication method according to an embodiment of this application;
FIG. 6G is a diagram of a sixth BSR in a communication method according to an embodiment of this application;
FIG. 6H is a diagram of a seventh BSR in a communication method according to an embodiment of this application;
FIG. 6I is a diagram of an eighth BSR in a communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

Embodiments of this application provide a communication method and apparatus. The method and the apparatus are based on a same technical concept. Because a problem-resolving principle of the method is similar to a problem-resolving principle of the apparatus, for implementations of the apparatus and the method, refer to each other. No repeated description is provided.

In the following, some terms in this application are described, so as to help a person skilled in the art have a better understanding.
(1) A communication apparatus is generally an apparatus having a communication function. For example, the communication apparatus may be but is not limited to a terminal device, a network device, a core network (core network, CN) device, or the like.
(2) A logical channel group (logical channel group, LCG) may include a plurality of LCs. A parameter of each LC may be configured by the network device. For example, configuration information of each LC includes parameters such as an identifier and a priority of the LCG. When configuring the parameter of the LC, the network device may configure LCs with a same priority or similar priorities in one LCG.

The priority in the configuration information of the LC may be determined by quality of service (quality of service, QoS). QoS of each data packet may be marked by a core network by using a QoS flow identifier (QoS flow identifier, QFI). A form of the QFI is a 5G quality of service identifier (5G QoS identifier, 5QI). One 5QI value may correspond to at least one QoS parameter: a priority, a packet delay budget (packet delay budget), a packet error rate (packet error rate), a default averaging window (default averaging window), and the like. The network device may map the priority in the 5QI to the priority in the configuration information of the LC.

(3) A BSR is used to request the network device to allocate, to the terminal device, an uplink resource used for data transmission. A format of the BSR may include at least one of the following.

A long BSR (long BSR) may include information about a plurality of LCGs, for example, include identifiers of the plurality of LCGs. A length of the long BSR is variable. For example, the length of the long BSR may vary with a quantity of LCGs included in the long BSR.

A short BSR (short BSR) may include information about one LCG, for example, include an identifier of one LCG. A length of the short BSR is fixed.

A truncated BSR (truncated BSR) may be used to carry zero-padded data. The truncated BSR may include a long truncated BSR (long truncated BSR) and a short truncated BSR (short truncated BSR). The long truncated BSR may be a long BSR used to carry the zero-padded data. The short truncated BSR may be a short BSR used to carry the zero-padded data.

In descriptions of embodiments of this application, unless otherwise specified, a quantity of nouns indicates "a singular noun or a plural noun," namely, "one or more." "At least one" means one or more, and "a plurality of" means two or more. The term "and/or" is used to describe an association relationship between associated objects and represents that three relationships may exist. For example, A and/or B may represent the following three cases: Only A exists, both A and B exist, and only B exists. The character "/" generally indicates an "or" relationship between the associated objects. "At least one of the following items (pieces)" or a similar expression thereof means any combination of these items (pieces), including any combination of singular items (pieces) or plural items (pieces).

In addition, it should be understood that in description of this application, terms such as "first" and "second" are merely used for distinguishing and description, but should not be understood as indicating or implying relative importance, or should not be understood as indicating or implying a sequence.

The communication method provided in embodiments of this application may be applied to a 4th generation (4th generation, 4G) communication system, for example, a long term evolution (long term evolution, LTE) communication system, or may be applied to a 5th generation (5th generation, 5G) communication system, for example, a 5G new radio (new radio, NR) communication system, or various communication systems evolved after 5G, for example, a 6G communication system. The method provided in embodiments of this application may be further applied to a Bluetooth system, a wireless fidelity (wireless fidelity, Wi-Fi) system, a long range radio (long range radio, LoRa) system, or an internet of vehicles system. The method provided in embodiments of this application may be further applied to a satellite communication system. The satellite communication system may be integrated with the foregoing communication system.

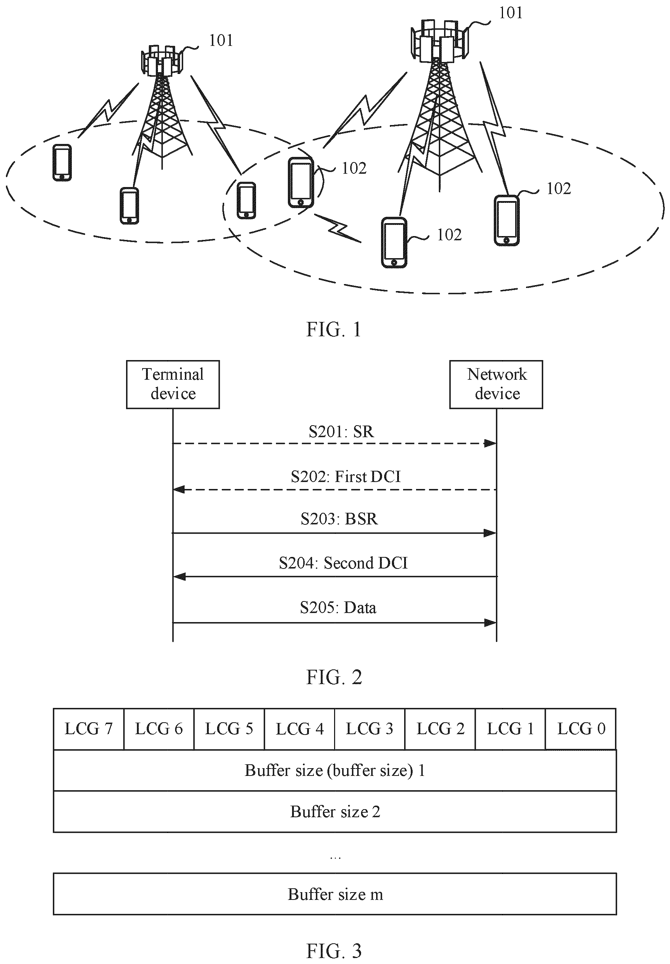

For ease of understanding of embodiments of this application, an application scenario to which this application is applicable is described by using an architecture of a communication system shown in FIG. 1 as an example. As shown in FIG. 1, the communication system includes network devices 101 and terminal devices 102. The apparatus provided in this embodiment of this application may be used in the network device 101 or the terminal device 102. It may be understood that FIG. 1 shows only one possible communication system architecture to which embodiments of this application may be applied. In another possible scenario, the communication system architecture may alternatively include another device.

Optionally, based on the architecture shown in FIG. 1, communication may be performed between the network device 101 and the terminal device 102, between different network devices 101, and between different terminal devices 102. For example, the terminal device 102 may communicate with the network device 101 through a radio air interface. For another example, different network devices 101 may communicate with each other in a wired manner. For another example, different terminal devices 102 may communicate with each other through a direct communication interface.

The network device 101 is a node in a radio access network (radio access network, RAN), and may also be referred to as a base station, a RAN node (or device), or an access network (access network, AN) node (or device). Currently, examples of some network devices 101 are: a base station gNB/NR-NB, a transmission reception point (transmission reception point, TRP), an evolved NodeB (evolved NodeB, eNB), a home base station (for example, a home evolved NodeB or a home NodeB, HNB), a baseband unit (base band unit, BBU) in NR, a Wi-Fi access point (access point, AP), a satellite device, a network device in a 5G communication system, or a network device in a communication system evolved after 5G.

The network device 101 may alternatively be another device having a network device function. For example, the network device 101 may alternatively be a device functions as a base station in device-to-device (device to device, D2D) communication, vehicle-to-everything communication, machine-to-machine communication, or drone communication, or a network device (which may be deployed on a high-altitude platform, a satellite, or a high-altitude aircraft) in a non-terrestrial network (non-terrestrial network, NTN) communication system. A specific form of the network device 101 may be a macro base station configured to provide a macro cell (macro cell), a micro base station configured to provide a pico cell (pico cell), or a femto base station configured to provide a femto cell (femto cell).

In some deployments, the network device may include a central unit (centralized unit, CU) and a distributed unit (distributed unit, DU). The network device may further include a radio unit (radio unit, RU). Both the CU and the DU can implement some functions of a gNB. It may be understood that the network device may be a CU node, a DU node, or a device including a CU node and a DU node. In addition, the CU may be classified into an access network, or may be classified into a core network. This is not limited herein.

Optionally, the network devices may communicate with each other through a backhaul (backhaul) link. The backhaul link may be a wired backhaul link (for example, an optical fiber or a copper cable), or may be a wireless backhaul link (for example, a microwave).

The terminal device 102 may also be referred to as user equipment (user equipment, UE), a mobile station (mobile station, MS), a mobile terminal (mobile terminal, MT), a wireless terminal, a handheld device, a client, or the like, and is a device that provides voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a mobile cellular phone, a cordless phone, a personal digital assistant (personal digital assistant, PDA), customer-premises equipment (customer-premises equipment, CPE), a smart point of sale (point of sale, POS) machine, a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control, a smart home device (for example, a refrigerator, a television, an air conditioner, or an electricity meter), an intelligent robot, a workshop device, a wireless terminal in uncrewed driving, a wireless terminal in remote surgery, a wireless terminal in a smart grid (smart grid), a wireless terminal in transportation safety, a wireless terminal in a smart city, a smartphone, a notebook computer, a tablet computer, a wireless data card, or a wireless modulator demodulator (modulator demodulator, Modem), a flight device (for example, an intelligent robot, a hot air balloon, an uncrewed aerial vehicle, or an airplane), a household appliance, a vehicle, a tool device, a service device, a service facility, and the like. The terminal device 102 may alternatively be another device having a terminal function. For example, the terminal device may be a device that functions as a terminal in D2D communication.

In this application, a terminal device having a wireless transceiver function and a chip that can be disposed in the terminal device are collectively referred to as the terminal device. The terminal device may communicate with a corresponding base station through a radio link.

The following uses the terminal device and the network device as an example to describe the method provided in embodiments of this application.

For example, the network device in this application is configured to provide a wireless access service for the terminal device. Specifically, each network device corresponds to a service coverage area. A terminal device that enters the area may communicate with the network device by using a radio signal, to receive the radio access service provided by the network device. Service coverage areas of network devices may overlap, and a terminal device in an overlapping area may receive radio signals from a plurality of network devices. Therefore, the plurality of network devices may simultaneously provide services for the terminal device.

For ease of understanding this application, the following describes related technologies.

Dynamic scheduling of uplink resources:
FIG. 2 shows a method for dynamically scheduling an uplink resource. The following describes the method with reference to FIG. 2.

S201: A terminal device sends a scheduling request (scheduling request, SR) to a network device, where the SR is used to notify the network device (for example, a gNodeB) that the terminal device needs an uplink resource.

When the terminal device has data to be sent to the network device, the terminal device may send the SR to the network device.

In addition, the terminal device may send the SR to the network device by using an SR resource preconfigured by the network device. Correspondingly, the network device may detect the SR from the terminal device on the preconfigured SR resource.

S202: The network device sends first downlink control information (downlink control information, DCI) to the terminal device, where the first DCI indicates a resource that is allocated by the network device to the terminal device and that is used to send a BSR.

S203: The terminal device sends the BSR to the network device by using the resource indicated by the first DCI.

As shown in FIG. 3, the BSR includes identifiers of a plurality of LCGs and a buffer size (buffer size) corresponding to each LCG. The buffer size corresponding to each LCG may indicate a size of data corresponding to each LCG.

Optionally, S201 and S202 are optional steps. In this case, in S203, the terminal device may send the BSR to the network device by using the preconfigured resource.

S204: The network device sends second DCI to the terminal device, where the second DCI indicates an uplink resource that is allocated by the network device to the terminal device and that is used for data transmission.

Optionally, after receiving the BSR, the network device may determine, based on the identifier of the LCG, an LC and parameters such as a priority corresponding to the LC. Then, the network device may schedule the uplink resource for the terminal device based on the parameters such as the priority, to ensure that the scheduled uplink resource meets a QoS requirement of the terminal device. For example, the identifiers of the LCGs in the BSR include an LCG 1 and an LCG 2. If a priority corresponding to the LCG 1 is higher than a priority corresponding to the LCG 2, the network device preferentially schedules the uplink resource for data corresponding to the LCG 1.

S205: The terminal device sends data to the network device by using the uplink resource.

The sent data may be carried on an uplink physical channel (uplink physical channel, UL-SCH).

Optionally, after receiving the second DCI, a media access control (media access layer, MAC) layer of the terminal device may multiplex data corresponding to a plurality of LCs on an uplink resource indicated by the second DCI, in other words, perform LC multiplexing (which may also be referred to as MAC multiplexing). The plurality of LCs may include some or all LCs in the plurality of LCGs in S203.

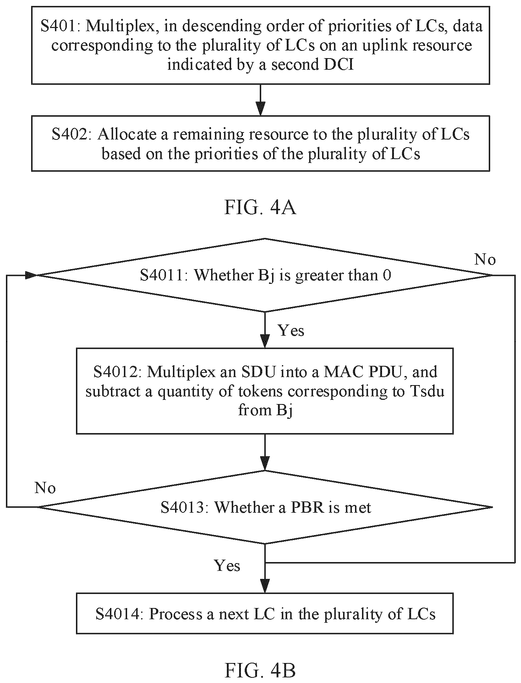

The MAC layer may perform LC multiplexing based on priorities of the plurality of LCs. The following specifically describes an LC multiplexing method with reference to FIG. 4A.

S401: The MAC layer multiplexes, in descending order of the priorities of the LCs, data corresponding to the plurality of LCs on the uplink resource indicated by the second DCI.

The MAC layer may multiplex, according to a token bucket (token bucket) algorithm, data corresponding to the plurality of LCs on the uplink resource indicated by the second DCI. A basic idea of the algorithm is to determine, based on whether there is a token in the token bucket and a quantity of tokens, whether to multiplex data of an LC, and control a data amount of the LC to be assembled into a MAC protocol data unit (protocol data unit, PDU).

As shown in FIG. 4B, S401 may include the following steps.

S4011: The MAC layer determines whether a variable Bj of an LCj is greater than 0. If Bj is greater than 0, S4012 is performed. If Bj is less than or equal to 0, S4014 is performed.

The LCj is any one of the plurality of LCs. Bj may indicate a quantity of available tokens (tokens) in a token bucket corresponding to the LCj, and each token corresponds to 1 byte (byte) of data.

A maximum capacity of the token bucket corresponding to the LCj is PBR×BSD. The prioritized bit rate (prioritized bit rate, PBR) may be used to determine a "bottom area" of the token bucket, and the bucket size duration (bucket size duration, BSD) may be used to determine a "depth" of the token bucket. The maximum capacity of the token bucket is a maximum amount of data that can be pending (pending, that is, buffered in a buffer (buffer)) on the LCj.

When the LCj is established, Bj is initialized to 0. Then, Bj increases by PBR×TTI each time a transmission time interval (transmission time interval, TTI) elapses. For example, if a PBR corresponding to a parameter prioritized bit rate (prioritized Bit Rate) is kbps8, the PBR is 8 kilobytes per second (kbps), that is, 8 kbps*1 millisecond (ms)=8-byte token may be injected into the token bucket corresponding to the LCj at each TTI.

In addition, a value of Bj is less than or equal to a quantity of tokens corresponding to a first capacity, and the first capacity is the maximum capacity of the token bucket corresponding to the LCj. For example, if the BSD is 500 ms and the PBR is 8 kbps, the maximum capacity of the token bucket corresponding to the LCj is 8kbps*500ms=4k byte. In this case, Bj is less than or equal to 4 kilo (k).

S4012: The MAC layer multiplexes a service data unit (service data unit, SDU) corresponding to the LCj into a MAC PDU, and subtracts a quantity of tokens corresponding to Tsdu from Bj.

The SDU is a basic unit for LC multiplexing, one MAC PDU may include a plurality of SDUs, and Tsdu is a data amount of the SDU. For example, when Tsdu is 8 bytes, in S4012, Bj-8.

S4013: The MAC layer determines whether the LCj meets the PBR. If the LCj meets the PBR, S4014 is performed. If the LCj does not meet the PBR, S4011 is performed.

When a first data amount is greater than or equal to a data amount corresponding to PBR*BSD, the LCj meets the PBR. When the first data amount is less than the data amount corresponding to PBR*BSD, the LCj does not meet the PBR. The first data amount is a total data amount of the SDU that corresponds to the LCj and that is multiplexed into the MAC PDU.

S4014: The MAC layer processes a next LC in the plurality of LCs.

The next LC may be an LC whose priority is second only to that of the LCj in the plurality of LCs. For a method for processing the next LC by the MAC layer, refer to the method for processing the LCj in S4011 to S4013. Details are not described herein again.

In addition, S4014 is an optional step. For example, if the LCj in S4011 to S4013 is an LC with a lowest priority in the plurality of LCs, S4014 is an optional step.

S402: If the uplink resource indicated by the second DCI further includes a remaining resource after S401, the MAC layer may allocate the remaining resource to the plurality of LCs based on the priorities of the plurality of LCs.

In this case, Bj may not be considered at the MAC layer. For example, after S401, the data corresponding to the plurality of LCs further includes data corresponding to an LC 1 and data corresponding to an LC 2. If a priority of the LC 1 is higher than a priority of the LC 2, after mapping all data corresponding to the LC 1 to the remaining resource, the MAC layer maps the data corresponding to the LC 2 to the remaining resource.

Currently, there are a plurality of data types in a mobile communication system. For example, the terminal device may have core network data, may have data sensed by the terminal device, and may have data or a parameter of an AI model that is calculated by the terminal device according to an AI algorithm. How the terminal device processes data of different data types is a problem that needs to be resolved.

In addition, as shown in FIG. 2, the network device does not consider a data type when scheduling the uplink resource for the terminal device. The network device may have different requirements for different data types at different moments. According to the method shown in FIG. 2, the base station cannot distinguish between data types, and therefore cannot effectively perform uplink scheduling.

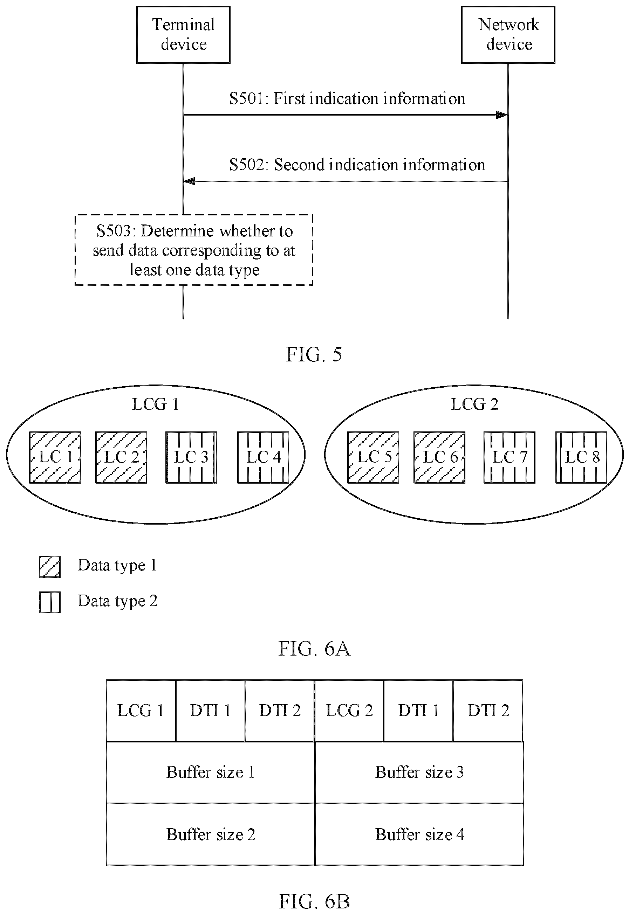

To resolve the foregoing technical problem, an embodiment of this application provides a communication method. The method may be applied to the communication system shown in FIG. 1. The following describes a procedure of the method in detail with reference to a flowchart shown in FIG. 5.

S501: A terminal device sends first indication information to a network device. The first indication information may be used to determine at least one data type, and the at least one data type is a data type of the terminal device.

Correspondingly, the network device receives the first indication information from the terminal device.

The data type of the terminal device may be a data type of data used for transmission in the terminal device. Optionally, the data type of the terminal device may include at least one of the following: core network data and local data. The core network data is data that needs to be sent to a core network. The local data may include data sensed by the terminal device and/or AI data of the terminal device. For example, the local data may include at least one of the following.
1. Original sensing data: unprocessed original data sensed by the terminal device, for example, original channel data sensed by the terminal device.
2. Static object sensing data: data of a static object sensed by the terminal device. For example, the static object sensing data may include at least one of the following: location information of the static object sensed by the terminal device, a recognition result of the static object (for example, a type or a name of the static object) sensed by the terminal device, and the like.
3. Low-speed moving object sensing data: data of a low-speed moving object sensed by the terminal device. A moving speed of the low-speed moving object may be less than a first speed threshold. For example, the low-speed moving object sensing data may include at least one of the following: location information of the low-speed moving object sensed by the terminal device, a recognition result of the low-speed moving object (for example, a type or a name of the low-speed moving object) sensed by the terminal device, the moving speed of the low-speed moving object sensed by the terminal device, and the like.
4. High-speed moving object sensing data: indicating a high-speed moving object sensed by the terminal device. A moving speed of the high-speed moving object may be greater than a second speed threshold. The second speed threshold is greater than or equal to the first speed threshold. The high-speed moving object sensing data may include at least one of the following: location information of the high-speed moving object sensed by the terminal device, a recognition result of the high-speed moving object (for example, a type or a name of the high-speed moving object) sensed by the terminal device, the moving speed of the high-speed moving object sensed by the terminal device, and the like.
5. Beam data: data of a transmit beam and/or a receive beam of the terminal device. For example, the beam data may include at least one of the following: a direction of the transmit beam and/or a direction of the receive beam, a width of the transmit beam and/or a width of the receive beam, and the like.
6. Training data or a parameter of an AI model: for example, data that is of the terminal device and that is used for AI training, or a parameter of the AI model of the terminal device. The AI model may be deployed in the terminal device, or may be located in another device (for example, another terminal device or a network device). The training data or the parameter of the AI model may be training data or a parameter collected by the terminal device, or may be training data or a parameter obtained by the terminal device from the another device.
7. Factory scenario anomaly detection data: indicating abnormal data that is of some devices in a factory and that is collected by the terminal device in a factory environment, such as power-off data that is of some devices in the factory and that is collected by the terminal device, device fault data that is of some devices in the factory and that is collected by the terminal device, device damage data that is of some devices in the factory due to a weather factor and that is collected by the terminal device, and device loss data that is of some devices in the factory and that is collected by the terminal device.

Each data type may correspond to one data type identifier (data type identifier, DTI). Table 1 shows a possible example of a correspondence between the data type and the data type identifier. This application is described by using an example in which a correspondence between the data type and the data type identifier is the correspondence shown in Table 1. Table 1 is merely used as a possible example, and the present invention does not exclude a possibility that the data is of another type.

**Table 1**

| DTI | Data type |
|---|---|
| 0 | Core network data |
| 1 | Original sensing data |
| 2 | Static object sensing data |
| 3 | Low-speed moving object sensing data |
| 4 | High-speed moving object sensing data |
| 5 | Beam data |
| 6 | Training data or parameter of an AI model |
| 7 | Factory scenario anomaly detection data |

Optionally, the first indication information may be carried in a media access control-control element (media access layer-control element, MAC-CE), uplink control information (uplink control information, UCI), or radio resource control (radio resource control, RRC) signaling. The MAC-CE may be a BSR or another message. The following uses an example in which the first indication information is carried in the BSR for description.

Optionally, S501 may be implemented in one of the following implementations.

### Implementation 1

The terminal device sends the BSR to the network device, where the BSR includes the first indication information. The first indication information may include the at least one data type, and the at least one data type corresponds to at least one LCG. In other words, the BSR may include the at least one data type, and the at least one data type corresponds to the at least one LCG. For example, when the data type of the terminal device includes the core network data and the low-speed moving object sensing data, the BSR includes a DTI 0 and a DTI 3.

Optionally, in the implementation 1, LCs in any one of the at least one LCG may correspond to different data types or a same data type.

Optionally, a manner in which the at least one data type corresponds to the at least one LCG may include one of the following.

Manner 1: A first data type is any one of at least one data type, and the first data type is a data type corresponding to one or more of the at least one LCG. In other words, each of the at least one data type is the data type corresponding to the one or more of the at least one LCG.

In some possible examples, for each of the at least one LCG, the terminal device may indicate a data type corresponding to the LCG. In this case, each of the at least one data type included in the BSR corresponds to one of the at least one LCG.

For example, as shown in FIG. 6A, the at least one LCG includes an LCG whose identifier is an LCG 1 and an LCG whose identifier is an LCG 2. The LCG whose identifier is the LCG 1 includes LCs whose identifiers are an LC 1 to an LC 4, and the LCG 2 includes LCs whose identifiers are an LC 5 to an LC 8. LCs whose identifiers are the LC 1, the LC 2, the LC 5, and the LC 6 correspond to a data type 1, and LCs whose identifiers are the LC 3, the LC 4, the LC 7, and the LC 8 correspond to a data type 2. The following uses an example in which the data type 1 is a data type corresponding to a DTI 1 and the data type 2 is the data type corresponding to a DTI 2 for description.

For a scenario shown in FIG. 6A, as shown in FIG. 6B, the BSR may include two data types DTI 1 and DTI 2 corresponding to the LCG 1, and two data types DTI 1 and DTI 2 corresponding to the LCG 2. Each data type may correspond to one or more LCs. For example, in FIG. 6A, the DTI 1 corresponding to the LCG 1 corresponds to the LC 1 and the LC 2, and the DTI 2 corresponding to the LCG 1 corresponds to the LC 3 and the LC 4. It is assumed that each data type occupies two bits. In this example, at least one data type in the scenario shown in FIG. 6A may be indicated by eight bits.

In some other possible examples, the at least one LCG forms a first LCG set, and the terminal device may indicate a data type corresponding to the first LCG set. In this case, each of the at least one data type included in the BSR corresponds to the first LCG set.

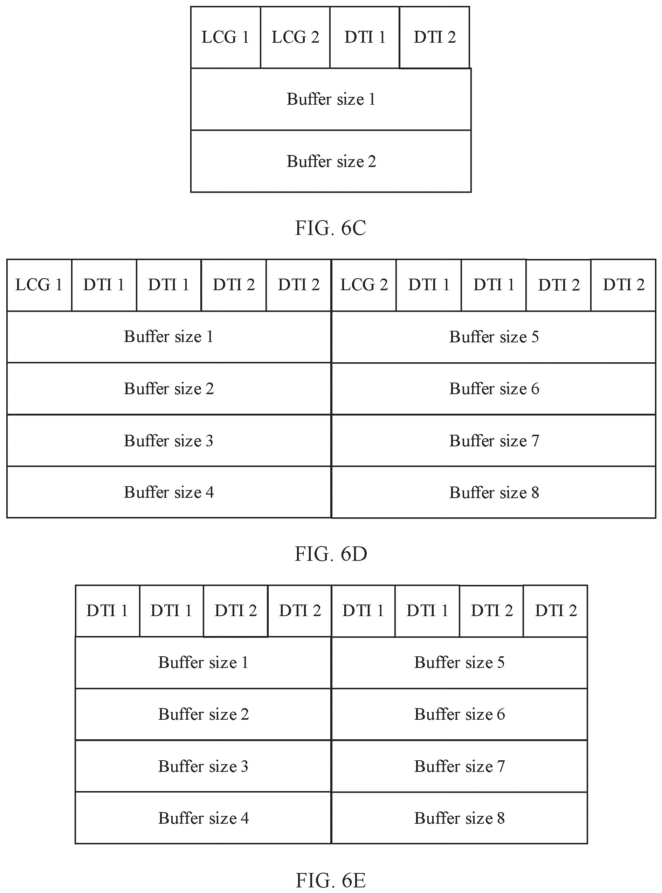

For example, for the scenario shown in FIG. 6A, as shown in FIG. 6C, the first LCG set includes LCGs whose identifiers are an LCG 1 and an LCG 2, and the BSR may include two data types DTI 1 and DTI 2 corresponding to the first LCG set. Each data type may correspond to one or more LCGs in the first LCG set. For example, in FIG. 6A, the DTI 1 corresponds to the LCG 1 and the LCG 2, and the DTI 2 also corresponds to the LCG 1 and the LCG 2. It is assumed that each data type occupies two bits. In this example, at least one data type in the scenario shown in FIG. 6A may be indicated by four bits.

In Manner 1, the data type corresponding to the at least one LCG may be indicated by a small quantity of data types, so that a quantity of bits occupied by the at least one data type can be reduced.

### Manner 2:

A second data type is any one of the at least one data type, the second data type is a data type corresponding to a first LC, the first LC belongs to a first LCG, and the first LCG is one of the at least one LCG.

In Manner 2, for each of the at least one LCG, the terminal device may indicate a data type corresponding to each LC in the LCG.

For example, for the scenario shown in FIG. 6A, as shown in FIG. 6D, the BSR may include: a DTI 1 corresponding to an LC 1 in an LCG 1, a DTI 1 corresponding to an LC 2 in the LCG 1, a DTI 2 corresponding to an LC 3 in the LCG 1, a DTI 2 corresponding to an LC 4 in the LCG 1, a DTI 1 corresponding to an LC 5 in an LCG 2, a DTI 1 corresponding to an LC 6 in the LCG 2, a DTI 2 corresponding to an LC 7 in the LCG 2, and a DTI 2 corresponding to an LC 8 in the LCG 2. It is assumed that each data type occupies two bits. In this example, at least one data type in the scenario shown in FIG. 6A may be indicated by 16 bits.

In Manner 2, the data type corresponding to each LC in each LCG can be accurately indicated, so that accuracy of indicating the data type is improved.

Optionally, in the implementation 1, for each LCG, a quantity of data types that may be indicated is less than or equal to a first quantity threshold. When a quantity of data types corresponding to one LCG is less than the first quantity threshold, the terminal device may indicate, by using some bits, the data type corresponding to the LCG, and pad remaining bits with default bits. For example, for each LCG, the terminal device may indicate the data type by using 10 bits. If each data type occupies two bits, five data types may be indicated in total, that is, the first quantity threshold is 5. When a quantity of data types corresponding to the one LCG is 3, the terminal device may indicate, by using the first six bits in the 10 bits, the data type corresponding to the LCG, and pad the last four bits in the 10 bits with default bits.

When a quantity of data types corresponding to the one LCG is greater than the first quantity threshold, the terminal device may indicate some data types corresponding to the LCG. The data types may be determined by the terminal device. Optionally, the terminal device may determine the some data types based on priorities of LCs in the LCG. For example, the terminal device may select, in descending order of the priorities of LCs in the LCG, data types corresponding to the LCs, until a quantity of selected data types is equal to the first quantity threshold. All data types selected by the terminal device are the some data types that need to be indicated and that are determined by the terminal device. For example, the LCG includes LCs whose identifiers are an LCa to an LCf, the LCa to LCf respectively correspond to a data type a to a data type f, priorities of the LCs whose identifiers are the LCa to the LCf in descending order are LCa, LCb, LCc, LCd, LCe and LCf, and the first quantity threshold is 5. In this case, the terminal device may indicate the data type a to the data type e.

Optionally, when the at least one LCG forms a first LCG set, and the terminal device may indicate a data type corresponding to the first LCG set, for the first LCG set, a quantity of data types that may be indicated by the terminal device is less than or equal to a second quantity threshold. When a quantity of data types corresponding to the first LCG set is less than the second quantity threshold, the terminal device may indicate, by using some bits, the data type corresponding to the first LCG set, and pad remaining bits with default bits. For example, for the first LCG set, the terminal device may indicate the data type by using 10 bits. If each data type occupies two bits, five data types may be indicated in total, that is, the second quantity threshold is 5. When a quantity of data types corresponding to the first LCG set is 3, the terminal device may indicate by using the first six bits in the 10 bits, the data type corresponding to the first LCG set, and pad the last four bits in the 10 bits with default bits.

When the quantity of data types corresponding to the first LCG set is greater than the second quantity threshold, the terminal device may indicate some data types corresponding to the first LCG set. Optionally, the terminal device may determine the some data types based on priorities of LCs in the first LCG set. For example, the terminal device may select, in descending order of priorities of LCs in the first LCG set, data types corresponding to the LCs, until a quantity of selected data types is equal to the second quantity threshold. All data types selected by the terminal device are the some data types that need to be indicated and that are determined by the terminal device. For example, the first LCG set includes LCs whose identifiers are an LCa to an LCf, the LCa to LCf respectively correspond to a data type a to a data type f, priorities of the LCs whose identifiers are the LCa to the LCf in descending order are LCa, LCb, LCc, LCd, LCe and LCf, and the first quantity threshold is 5. In this case, the terminal device may indicate the data type a to the data type e.

In the implementation 1, the terminal device may indicate the data type of the terminal device by using the at least one data type in the BSR. This is easy to implement. In addition, the at least one data type corresponds to the LCG, so that the network device can determine the data type corresponding to the LCG, and schedule an uplink resource based on the data type. This improves effectiveness of data scheduling and data transmission.

In addition, when all LCs in one LCG correspond to a same data type, overheads required for indicating the data type can be reduced by using the implementation 1.

Implementation 2: The terminal device sends a BSR to the network device, where the BSR includes the first indication information, the first indication information includes the at least one data type, and the at least one data type corresponds to at least one LC. In other words, the BSR includes the at least one data type, and the at least one data type corresponds to the at least one LC. For example, when the data type of the terminal device includes the core network data and the low-speed moving object sensing data, the BSR includes a DTI 0 and a DTI 3.

Optionally, a third data type is any one of the at least one data type, and the third data type is a data type corresponding to one or more of the at least one LC. In other words, each of the at least one data type is a data type corresponding to one or more of the at least one LC.

In some possible examples, for each of the at least one LC, the terminal device indicates a data type corresponding to the LC. In this case, each of the at least one data type included in the BSR corresponds to one of the at least one LC.

For example, for the scenario shown in FIG. 6A, as shown in FIG. 6E, the BSR may include: a DTI 1 corresponding to an LC 1, a DTI 1 corresponding to an LC 2, a DTI 2 corresponding to an LC 3, a DTI 2 corresponding to an LC 4, a DTI 1 corresponding to an LC 5, a DTI 1 corresponding to an LC 6, a DTI 2 corresponding to an LC 7, and a DTI 2 corresponding to an LC 8. It is assumed that each data type occupies two bits. In this example, at least one data type in the scenario shown in FIG. 6A may be indicated by 16 bits.

In some other possible examples, the at least one LC forms a first LC set, and the terminal device may indicate a data type corresponding to the first LC set. In this case, each of the at least one data type included in the BSR corresponds to the first LC set.

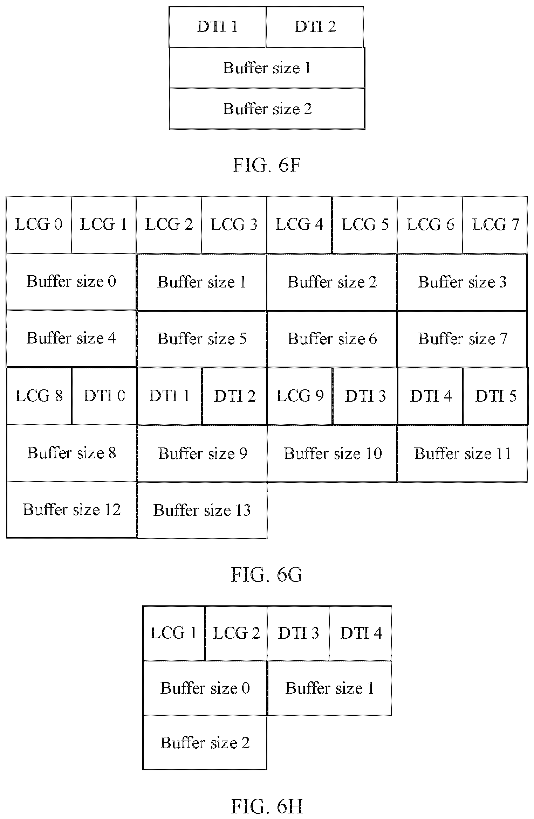

For example, for the scenario shown in FIG. 6A, as shown in FIG. 6F, the first LC set includes LCs whose identifiers are an LC 1 to an LC 8, and the BSR may include two data types DTI 1 and DTI 2 corresponding to the first LC set. Each data type may correspond to one or more LCs. The DTI 1 corresponds to the LC 1, the LC 2, the LC 5, and the LC 6, and the DTI 2 corresponds to the LC 3, the LC 4, the LC 7, and the LC 8. It is assumed that each data type occupies two bits. In this example, at least one data type in the scenario shown in FIG. 6A may be indicated by four bits.

In the implementation 2, the terminal device may indicate the data type of the terminal device by using the at least one data type in the BSR. This is easy to implement. In addition, the at least one data type corresponds to the LC, so that the network device can determine the data type corresponding to the LC, and schedule an uplink resource based on the data type. This improves effectiveness of data scheduling and data transmission.

Optionally, in the implementation 1 or the implementation 2, the BSR may further include at least one buffer size.

In some possible manners, the at least one buffer size corresponds to the at least one LCG, and each buffer size is used to indicate a size of data corresponding to an LCG corresponding to the buffer size. A manner in which the at least one buffer size corresponds to the at least one LCG is not limited in this application.

In some other possible manners, the at least one buffer size corresponds to at least one data type, and each buffer size is used to indicate a size of data corresponding to a data type corresponding to the buffer size.

For example, as shown in FIG. 6B, the BSR further includes a buffer size 1 to a buffer size 4. The buffer size 1 corresponds to a data type indicated by a DTI 1 corresponding to the LCG 1, the buffer size 2 corresponds to a data type indicated by a DTI 2 corresponding to the LCG 1, the buffer size 3 corresponds to a data type indicated by a DTI 1 corresponding to the LCG 2, and the buffer size 4 corresponds to a data type indicated by a DTI 2 corresponding to the LCG 2.

For another example, as shown in FIG. 6C, the BSR further includes a buffer size 1 and a buffer size 2. The buffer size 1 corresponds to a data type indicated by a DTI 1, and the buffer size 2 corresponds to a data type indicated by a DTI 2.

For another example, as shown in FIG. 6D, the BSR further includes a buffer size 1 to a buffer size 8. The buffer size 1 corresponds to a data type indicated by a DTI 1 corresponding to an LC 1 in the LCG 1, the buffer size 2 corresponds to a data type indicated by a DTI 1 corresponding to an LC 2 in the LCG 1, the buffer size 3 corresponds to a data type indicated by a DTI 2 corresponding to an LC 3 in the LCG 1, the buffer size 4 corresponds to a data type indicated by a DTI 2 corresponding to an LC 4 in the LCG 1, the buffer size 5 corresponds to a data type indicated by a DTI 1 corresponding to an LC 5 in the LCG 2, the buffer size 6 corresponds to a data type indicated by a DTI 1 corresponding to an LC 6 in the LCG 2, the buffer size 7 corresponds to a data type indicated by a DTI 2 corresponding to an LC 7 in the LCG 2, and the buffer size 8 corresponds to a data type indicated by a DTI 2 corresponding to an LC 8 in the LCG 2.

For another example, as shown in FIG. 6E, the BSR further includes a buffer size 1 to a buffer size 8. The buffer size 1 corresponds to a data type indicated by a DTI 1 corresponding to the LC 1, the buffer size 2 corresponds to a data type indicated by a DTI 1 corresponding to the LC 2, the buffer size 3 corresponds to a data type indicated by a DTI 2 corresponding to the LC 3, the buffer size 4 corresponds to a data type indicated by a DTI 2 corresponding to the LC 4, the buffer size 5 corresponds to a data type indicated by a DTI 1 corresponding to the LC 5, the buffer size 6 corresponds to a data type indicated by a DTI 1 corresponding to the LC 6, the buffer size 7 corresponds to a data type indicated by a DTI 2 corresponding to the LC 7, and the buffer size 8 corresponds to a data type indicated by a DTI 2 corresponding to the LC 8.

For another example, as shown in FIG. 6F, the BSR further includes a buffer size 1 and a buffer size 2. The buffer size 1 corresponds to a data type indicated by a DTI 1, and the buffer size 2 corresponds to a data type indicated by a DTI 2.

Optionally, in the implementation 1 or the implementation 2, the at least one data type may include data types corresponding to some LCGs or LCs of the terminal device. In addition to the foregoing some LCGs or LCs, for remaining LCGs or LCs of the terminal device, the terminal device may not indicate a data type, or implicitly indicate a data type. For specific content of the implicit manner, refer to the following implementation 3 and/or implementation 4. Details are not described herein. For example, when data of the terminal device includes local data and core network data, the local data and the core network data may correspond to different LCGs or LCs. For the LCG or the LC corresponding to the core network data, the terminal device may not indicate the data type, or implicitly indicate the data type. For the LCG corresponding to the local data, the terminal device may indicate the data type in the implementation 1 or the implementation 2.

For example, the data of the terminal device includes the local data and the core network data. The core network data corresponds to eight LCGs whose identifiers are an LCG 0 to an LCG 7. The local data corresponds to two LCGs whose identifiers are an LCG 8 and an LCG 9. Data types corresponding to the LCG 8 include three data types whose identifiers are DTI 0 to DTI 2, and data types corresponding to the LCG 9 include three data types whose identifiers are DTI 3 to DTI 5. As shown in FIG. 6G, a BSR includes an LCG 0 to an LCG 9, the DTI 0 to the DTI 2 corresponding to the LCG 8, and the DTI 3 to the DTI 5 corresponding to the LCG 9. Optionally, the BSR may further include a buffer size 0 to a buffer size 13. The buffer size 0 to the buffer size 7 respectively correspond to the LCG 0 to the LCG 7, and each of the buffer size 0 to the buffer size 7 is used to indicate a size of data corresponding to a corresponding LCG. The buffer size 8 to the buffer size 13 respectively correspond to the DTI 0 to the DTI 5, and each of the buffer size 8 to the buffer size 13 is used to indicate a size of data corresponding to a corresponding DTI.

For another example, the data type of the terminal device includes five data types whose identifiers are a DTI 0 to a DTI 4. The DTI 0 to the DTI 2 correspond to the LCG 1, and the DTI 3 to the DTI 4 correspond to the LCG 2. As shown in FIG. 6H, a BSR includes an LCG 1 and an LCG 2, and a DTI 3 and a DTI 4 corresponding to the LCG 2. The LCG 1 may be used to indicate the DTI 0 to the DTI 2. For specific content, refer to the following implementation 3. Details are not described herein. Optionally, the BSR may further include a buffer size 0 to a buffer size 2. The buffer size 0 corresponds to the LCG 1, and is used to indicate a size of data corresponding to the LCG 1. The buffer size 1 to the buffer size 2 respectively correspond to the DTI 3 to the DTI 4, and each of the buffer size 1 to the buffer size 2 is used to indicate a size of data corresponding to a corresponding DTI.

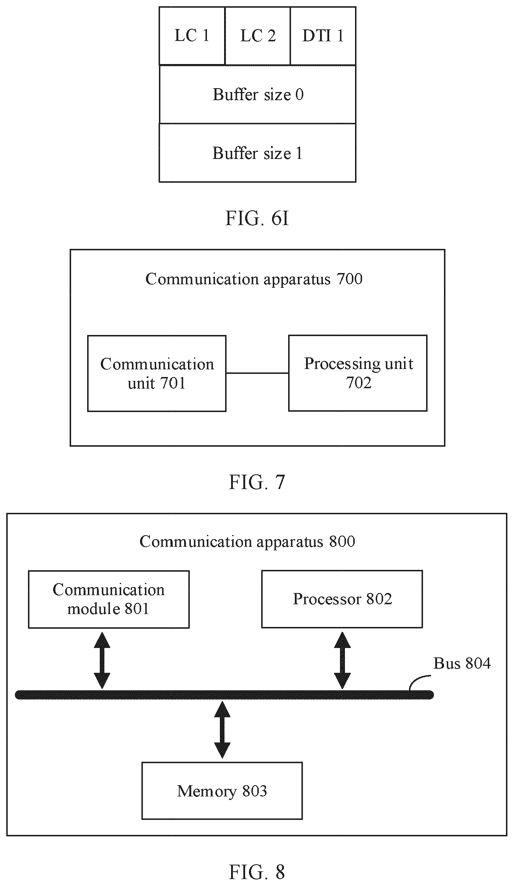

For another example, the data type of the terminal device includes two data types whose identifiers are a DTI 0 and a DTI 1. The DTI 0 corresponds to the LC 1, and the DTI 1 corresponds to the LC 2 As shown in FIG. 6I, a BSR includes an LC 1 to an LC 2 and a DTI 1 corresponding to the LC 2. The LC 1 may be used to indicate the DTI 0. For specific content, refer to the following implementation 4. Details are not described herein. Optionally, the BSR may further include a buffer size 0 to a buffer size 1. The buffer size 0 corresponds to the LC 1, and is used to indicate a size of data corresponding to the LC 1. The buffer size 1 corresponds to the DTI 1, and is used to indicate a size of data corresponding to the DTI 1.

Optionally, when the terminal device indicates the data type by using the method in the implementation 1 or the implementation 2, if the data of the terminal device includes the core network data but does not include the local data, the BSR sent by the terminal device to the network device may not include the at least one data type. In this way, if the BSR received by the network device does not include the at least one data type, the network device may determine that the data of the terminal device includes the core network data, but does not include the local data.

Implementation 3: The terminal device sends a BSR to the network device, where the BSR includes the first indication information, the first indication information includes indication information of the at least one LCG, and the at least one LCG corresponds to the at least one data type. In other words, the BSR includes the indication information of the at least one LCG, and the at least one LCG corresponds to the at least one data type.

The indication information of the at least one LCG may be an identifier of the at least one LCG. A correspondence between the at least one LCG and the at least one data type may be a one-to-one correspondence, a one-to-many correspondence, or a many-to-one correspondence.

Optionally, a second LCG is any one of the at least one LCG, configuration information of the second LCG or the configuration information of the LC in the second LCG includes a fourth data type, and the fourth data type is a data type that is in the at least one data type and that corresponds to the second LCG. In other words, the correspondence between the at least one LCG and the at least one data type may be represented by using configuration information of each LCG or configuration information of an LC in each LCG, and the configuration information of the LCG or the configuration information of the LC may include the data type.

For example, for the scenario shown in FIG. 6A, configuration information of LCs whose identifiers are an LC 1, an LC 2, an LC 5, and an LC 6 includes a DTI 1, and configuration information of LCs whose identifiers are an LC 3, an LC 4, an LC 7, and an LC 8 includes a DTI 2. The BSR includes an LCG 1 and an LCG 2. In this way, after receiving the BSR, the network device may determine the data type of the terminal device by searching for configuration information of each LC in LCGs whose identifiers are the LCG 1 and the LCG 2.

For another example, for the scenario shown in FIG. 6A, configuration information of the LCGs whose identifiers are the LCG 1 and the LCG 2 includes a DTI 1 and a DTI 2, and the BSR includes the LCG 1 and the LCG 2. In this way, after receiving the BSR, the network device may determine the data type of the terminal device by searching for the configuration information of the LCGs whose identifiers are the LCG 1 and the LCG 2.

In this implementation 3, the terminal device may indirectly indicate a data type of the terminal device by using the indication information of the LCG in the BSR, and does not need to additionally send a data type identifier, thereby reducing overheads.

Implementation 4: The terminal device sends a BSR to the network device, where the BSR includes the first indication information, the first indication information includes indication information of the at least one LC, and the at least one LC corresponds to the at least one data type. In other words, the BSR includes indication information of the at least one LC, and the at least one LC corresponds to the at least one data type.

The indication information of the at least one LC may be an identifier of the at least one LC. A correspondence between the at least one LC and the at least one data type may be a one-to-one correspondence, a one-to-many correspondence, or a many-to-one correspondence.

Optionally, a second LC is any one of the at least one LC, configuration information of the second LC includes a fifth data type, and the fifth data type is a data type that is in the at least one data type and that corresponds to the second LC. In other words, the correspondence between the at least one LC and the at least one data type may be represented by using configuration information of each LC, and the configuration information of the LC may include the data type.

For example, for the scenario shown in FIG. 6A, configuration information of LCs whose identifiers are an LC 1, an LC 2, an LC 5, and an LC 6 includes a DTI 1, and configuration information of LCs whose identifiers are an LC 3, an LC 4, an LC 7, and an LC 8 includes a DTI 2. The BSR includes the LC 1 to the LC 8. In this way, after receiving the BSR, the network device may determine the data type of the terminal device by searching for configuration information of LCs whose identifiers are the LC 1 to the LC 8.

In this manner, the terminal device may indirectly indicate a data type of the terminal device by using the indication information of the LC in the BSR, and does not need to additionally send a data type identifier, thereby reducing overheads.

Implementation 5: The terminal device sends a BSR to the network device, where the first indication information is the BSR. A BSR format corresponds to a data type, and different BSR formats may correspond to different data types.

For example, Table 2 shows a possible correspondence between the format identifier of the BSR and the data type. The format identifier of the BSR may be used to indicate whether data of the terminal device is core network data, local data, or a combination of core network data and local data. In this way, after receiving the BSR, the network device may determine, based on the format identifier of the BSR, whether the data of the terminal device is the core network data, the local data, or the combination of the core network data and the local data. If the format identifier of the BSR received by the network device is 33, the network device may determine that the at least one data type includes the local data.

**Table 2**

| BSR format identifier | Data type and BSR |
|---|---|
| 33 | Short truncated BSR for local data (short truncated BSR for local data) |
| 34 | Long truncated BSR for local data (Long Truncated BSR for local data) |
| 35 | Short BSR for local data (Short BSR for local data) |
| 36 | Long BSR for local data (Long BSR for local data) |
| 37 | Short truncated BSR for core network data (Short truncated BSR for CN data) |
| 38 | Long truncated BSR for core network data (Long truncated BSR for CN data) |
| 39 | Short BSR for core network data (Short BSR for CN data) |
| 40 | Long BSR for core network data (Long BSR for CN data) |
| 59 | Short truncated BSR for core network data and local data (Short truncated BSR for CN data and local data) |
| 60 | Long truncated BSR for core network data and local data (Long truncated BSR for CN data and local data) |
| 61 | Short BSR for core network data and local data (Short BSR for CN data and local data) |
| 62 | Long BSR for core network data and local data (Long BSR for CN data and local data) |

Optionally, the BSR may be carried in a MAC-CE. The MAC-CE corresponds to a MAC subheader (subheader). Therefore, the format identifier of the BSR may be determined based on a format identifier of the MAC subheader. The format identifier of the MAC subheader may be represented by an LC identifier (logical channel identifier (logic channel ID, LCID)). Therefore, the format identifier of the BSR in Table 2 may be replaced with the LCID.

In addition, the implementation 5 may be used in combination with any one of the implementation 1 to the implementation 4. For example, the terminal device may indicate, in Manner 2, that the at least one data type includes the local data, and indicate, in any one of the implementation 1 to the implementation 4, that the at least one data type includes one or more data types of the local data.

S502: The network device sends second indication information to the terminal device. The second indication information may indicate the terminal device whether to send the data corresponding to the at least one data type.

Correspondingly, the terminal device receives the second indication information from the network device.

The network device may send the second indication information to the terminal device by using a DCI. For example, the network device may send the second indication information to the terminal device by using a second DCI in FIG. 2.

Optionally, the second indication information is a bitmap (bitmap). The first bit is any bit in the bitmap, and the sixth data type is a data type corresponding to the first bit in the at least one data type. A value of the first bit may be used to indicate the terminal device whether to send data corresponding to the sixth data type. For example, when the value of the first bit is a first value (for example, 0 or 1), the first bit may be used to indicate the terminal device not to send the data corresponding to the sixth data type, or the first bit may be used to indicate the terminal device to discard or clear the data corresponding to the sixth data type. For another example, when the value of the first bit is a second value (for example, 1 or 0), the first bit may be used to indicate the terminal device to send the data corresponding to the sixth data type.

In some possible manners, a quantity of bits included in the bitmap is the same as a quantity of the at least one data type. For example, as shown in FIG. 6B, the BSR includes four data types, and the quantity of bits included in the bitmap is 4. The 1^{st} to 4^{th} bits in the bitmap respectively correspond to a DTI 1 corresponding to the LCG 1, a DTI 2 corresponding to the LCG 1, a DTI 1 corresponding to the LCG 2, and a DTI 2 corresponding to the LCG 2. For another example, the BSR may include six pieces of local data and eight pieces of core network data, and the quantity of bits included in the bitmap is 14. The 1^{st} to 14^{th} bits in the bitmap respectively correspond to the six pieces of local data and the eight pieces of core network data.

In some other possible manners, the quantity of bits included in the bitmap is the same as a quantity of data types included in a first data type set, and the first data type set is preconfigured or indicated by the network device. Optionally, data types in the first data type set may be different from each other. The first data type set may include all data types that may be or are allowed to be sent. For example, the first data type set may include the data types shown in Table 1. In this case, the quantity of bits included in the bitmap is 8. The 1^{st} to 8^{th} bits in the bitmap respectively correspond to the DTI 0 to the DTI 7 in Table 1.

Optionally, the second indication information may be determined by the network device. Specifically, after receiving the first indication information, the network device may determine the at least one data type based on the first indication information, and determine, with reference to a requirement of the network device, whether the terminal device is allowed to send the data corresponding to each of the at least one data type, to determine the second indication information.

The network device may determine, based on a life cycle of an AI model, a communication quality monitoring result, and/or the like, whether the terminal device is allowed to send data corresponding to each of the at least one data type. For example, if the at least one data type includes a DTI 1 and a DTI 6, a data type corresponding to the DTI 1 is raw sensing data, and a data type corresponding to the DTI 6 is AI training data or a model parameter. If a current network device needs to update training data required by the AI model, and the network device detects that the communication quality between the network device and the terminal device meets a requirement (for example, signal quality between the network device and the terminal device is greater than a signal quality threshold), new sensing data used to assist in communication is not required temporarily. In this case, the network device may determine that the terminal device is allowed to send data corresponding to the DTI 6, and the terminal device is not allowed to send data corresponding to the DTI 1. In this case, the second indication information may be used to indicate the terminal device to send the data corresponding to the DTI 6, and not to send the data corresponding to the DTI 1.

In addition, the network device may allocate an uplink resource to data corresponding to a data type that is allowed to be sent by the terminal device, and does not allocate an uplink resource to data corresponding to a data type that is not allowed to be sent by the terminal device. Then, the network device may send, to the terminal device, information that indicates the uplink resource allocated by the network device to the terminal device. The information that indicates the uplink resource allocated by the network device to the terminal device and the second indication information may be carried in a same message, or may be carried in different messages.

S503: The terminal device determines, based on the second indication information, whether to send the data corresponding to the at least one data type.

S503 is an optional step.

The terminal device may determine, based on the bitmap, whether to send the data corresponding to the at least one data type. Specifically, the terminal device may determine, based on a value of a first bit, to send data corresponding to a sixth data type, or discard the data corresponding to the sixth data type. The sixth data type is a data type that is in the at least one data type and that corresponds to the first bit in the bitmap. For example, when the value of the first bit is a first value (for example, 0 or 1), the terminal device determines not to send the data corresponding to the sixth data type. In this case, the terminal device may discard the data corresponding to the sixth data type, and clear a buffer corresponding to the data corresponding to the sixth data type. For another example, when the value of the first bit is a second value (for example, 1 or 0), the terminal device may determine to send the data corresponding to the sixth data type.

If values of all bits included in the bitmap are the first value, the terminal device may discard sent data, and clear a buffer corresponding to the sent data. In this case, the bitmap may be considered as signaling for indicating the terminal device to stop uplink data transmission.

Optionally, if the terminal device determines, based on the value of the first bit, to discard the data corresponding to the sixth data type, the terminal device may exclude the data corresponding to the sixth data type when LC multiplexing is performed on the data.

For example, for the scenario shown in FIG. 6A and the implementation corresponding to FIG. 6B, if the bitmap indicates to discard the data of the DTI 1 corresponding to the LCG 1, when performing LC multiplexing on the data, the terminal device may exclude data corresponding to LCs whose identifiers are an LC 1 and an LC 2. LC multiplexing is performed on LCs whose identifiers are an LC 3 to an LC 8 by using the methods shown in FIG. 4A and FIG. 4B.

For example, for the scenario shown in FIG. 6A and the implementation corresponding to FIG. 6C, if the bitmap indicates to discard the data corresponding to the DTI 1, when performing LC multiplexing on the data, the terminal device may exclude data corresponding to LCs whose identifiers are an LC 1, an LC 2, an LC 5, and an LC 6. LC multiplexing is performed on data corresponding to LCs whose identifiers are an LC 3, an LC 4, an LC 7, and an LC 8 by using the methods shown in FIG. 4A and FIG. 4B.

In addition, a priority of the LC may be updated. Optionally, the network device may update the priority of the LC based on a requirement of the network device. The network device may update the priority of the LC based on a life cycle of an AI model, a communication quality monitoring result, and/or the like.

When the network device determines, based on the life cycle of the AI model and/or the communication quality monitoring result, or the like, that data of a data type is required, the network device may increase the priority of the LC corresponding to the data type. For example, when the network device performs online training on the AI model, the network device determines that AI training data needs to be obtained. In this case, the network device may increase the priority of the LC corresponding to the AI training data. For another example, when the network device detects that quality of communication between the network device and the terminal device does not meet a requirement (for example, signal quality between the network device and the terminal device is less than a signal quality threshold), the network device determines that original sensing data used to assist in communication needs to be obtained. In this case, the network device may increase a priority of an LC corresponding to the original sensing data.

When the network device determines, based on the life cycle of the AI model, the communication quality monitoring result, and/or the like, that the data of the data type is not required, the network device may reduce the priority of the LC corresponding to the data type. For example, when the network device does not perform online training on the AI model, the network device determines that the AI training data does not need to be obtained. In this case, the network device may reduce the priority of the LC corresponding to the AI training data. For example, when the network device detects that the quality of communication between the network device and the terminal device meets the requirement, the network device determines that the original sensing data used to assist in communication does not need to be obtained. In this case, the network device may reduce the priority of the LC corresponding to the original sensing data.

When a priority of any one of the at least one LC is updated, the network device may send the updated priority of the LC to the terminal device. When performing LC multiplexing on the sent data, the terminal device may perform LC multiplexing based on the updated priority of the LC. For a specific LC multiplexing method, refer to the descriptions of FIG. 4A and FIG. 4B. Details are not described herein again.

According to the method shown in FIG. 5, after sending, to the network device, the first indication information used to determine the at least one data type, the terminal device may receive the second indication information from the network device, where the second indication information indicates the terminal device whether to send the data corresponding to the at least one data type. In this way, the terminal device may process, under an indication of the network device, the data corresponding to at least one data type, to improve data processing effectiveness.

In addition, after the terminal device sends, to the network device, the first indication information used to determine the at least one data type, the network device may perform scheduling based on the data type of the terminal device, so that uplink transmission data is data of a data type required by the network device, and the terminal device is prevented from sending data that is not required by the terminal device to the network device. This improves effectiveness of data scheduling and data transmission, and improves spectral efficiency of the system.

Based on a same technical concept as the method embodiment in FIG. 5, an embodiment of this application provides a communication apparatus in FIG. 7, and the communication apparatus may be configured to perform functions of related steps in the foregoing method embodiments. The function may be implemented by hardware, or may be implemented by software or by hardware executing corresponding software. The hardware or the software includes one or more modules corresponding to the foregoing function. A structure of the communication apparatus is shown in FIG. 7, and includes a communication unit 701 and a processing unit 702. The communication apparatus 700 may be used in the terminal device or the network device in the communication system shown in FIG. 1, and may implement the communication method provided in the foregoing embodiments and examples of this application. Functions of units in the communication apparatus 700 are described below.

The communication unit 701 is configured to receive and send data. The communication unit 701 may be implemented by using a transceiver, for example, a mobile communication module. The mobile communication module may include at least one antenna, at least one filter, a switch, a power amplifier, a low noise amplifier (low noise amplifier, LNA), and the like.

The processing unit 702 may be configured to support the communication apparatus 700 in performing a processing action in the foregoing method embodiments. The processing unit 702 may be implemented by a processor. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

In an implementation, the communication apparatus 700 is applied to the terminal device in the embodiment of this application shown in FIG. 5. The following describes specific functions of the processing unit 702 in this implementation.

The processing unit 702 is configured to: send first indication information to a network device through the communication unit 701, where the first indication information is used to determine at least one data type, and the at least one data type is a data type of the terminal device; receive second indication information from the network device through the communication unit 701, where the second indication information indicates the terminal device whether to send data corresponding to the at least one data type.

Optionally, the processing unit 702 is specifically configured to send a BSR to the network device through the communication unit 701, where the BSR includes the first indication information, the first indication information includes the at least one data type, and the at least one data type corresponds to at least one logical channel.

Optionally, a first data type is any one of the at least one data type, and the first data type is a data type corresponding to one or more of the at least one logical channel group; or a second data type is any one of the at least one data type, the second data type is a data type corresponding to a first logical channel, the first logical channel belongs to a first logical channel group, and the first logical channel group is one of the at least one logical channel group.

Optionally, the processing unit 702 is specifically configured to send a BSR to the network device through the communication unit 701, where the BSR includes the first indication information, the first indication information includes the at least one data type, and the at least one data type corresponds to at least one logical channel.

Optionally, a third data type is any one of the at least one data type, and the third data type is a data type corresponding to one or more of the at least one logical channel.

Optionally, the processing unit 702 is specifically configured to send a BSR to the network device through the communication unit 701, where the BSR includes the first indication information, the first indication information includes indication information of at least one logical channel group, and the at least one logical channel group corresponds to the at least one data type.

Optionally, a second logical channel group is any one of the at least one logical channel group; and configuration information of a logical channel in the second logical channel group includes a fourth data type, or configuration information of the second logical channel group includes a fourth data type, where the fourth data type is a data type that is in the at least one data type and that corresponds to the second logical channel group.

Optionally, the processing unit 702 is specifically configured to send a BSR to the network device through the communication unit 701, where the BSR includes the first indication information, the first indication information includes indication information of at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

Optionally, the second indication information is a bitmap, and the processing unit 702 is further configured to determine, based on the bitmap, whether to send the data corresponding to the at least one data type.

Optionally, a quantity of bits included in the bitmap is the same as a quantity of the at least one data type; or a quantity of bits included in the bitmap is the same as a quantity of data types included in a first data type set, and the first data type set is preconfigured or indicated by the network device.

Optionally, the processing unit 702 is further configured to determine, based on a value of a first bit, to send data corresponding to a sixth data type or discard the data corresponding to the sixth data type, where the first bit is any bit in the bitmap, and the sixth data type is a data type that is in the at least one data type and that corresponds to the first bit.

Optionally, the processing unit 702 is further configured to: if it is determined, based on the value of the first bit, to discard the data corresponding to the sixth data type, exclude the data corresponding to the sixth data type when logical channel multiplexing is performed on the data.

In another implementation, the communication apparatus 700 is used in the network device in the embodiment of this application shown in FIG. 5. The following describes specific functions of the processing unit 702 in this implementation.

The processing unit 702 is configured to: receive first indication information from a terminal device through the communication unit 701, where the first indication information is used to determine at least one data type, and the at least one data type is a data type of the terminal device; send second indication information to the terminal device through the communication unit 701, where the second indication information indicates the terminal device whether to send data corresponding to the at least one data type.

Optionally, the processing unit 702 is specifically configured to receive a BSR from the terminal device through the communication unit 701, where the BSR includes the first indication information, the first indication information includes the at least one data type, and the at least one data type corresponds to at least one logical channel.

Optionally, a first data type is any one of the at least one data type, and the first data type is a data type corresponding to one or more of the at least one logical channel group; or a second data type is any one of the at least one data type, the second data type is a data type corresponding to a first logical channel, the first logical channel belongs to a first logical channel group, and the first logical channel group is one of the at least one logical channel group.

Optionally, the processing unit 702 is specifically configured to receive a BSR from the terminal device through the communication unit 701, where the BSR includes the first indication information, the first indication information includes the at least one data type, and the at least one data type corresponds to at least one logical channel.

Optionally, a third data type is any one of the at least one data type, and the third data type is a data type corresponding to one or more of the at least one logical channel.

Optionally, the processing unit 702 is specifically configured to receive a BSR from the terminal device through the communication unit 701, where the BSR includes the first indication information, the first indication information includes indication information of at least one logical channel group, and the at least one logical channel group corresponds to the at least one data type.

Optionally, a second logical channel group is any one of the at least one logical channel group; and configuration information of a logical channel in the second logical channel group includes a fourth data type, or configuration information of the second logical channel group includes a fourth data type, where the fourth data type is a data type that is in the at least one data type and that corresponds to the second logical channel group.

Optionally, the processing unit 702 is specifically configured to receive a BSR from the terminal device through the communication unit 701, where the BSR includes the first indication information, the first indication information includes indication information of at least one logical channel, and the at least one logical channel corresponds to the at least one data type.

Optionally, a second logical channel is any one of the at least one logical channel, configuration information of the second logical channel includes a fifth data type, and the fifth data type is a data type that is in the at least one data type and that corresponds to the second logical channel.

Optionally, the second indication information is a bitmap.

Optionally, a quantity of bits included in the bitmap is the same as a quantity of the at least one data type; or a quantity of bits included in the bitmap is the same as a quantity of data types included in a first data type set, and the first data type set is preconfigured or indicated by the network device.

Optionally, a value of a first bit is used to determine to send data corresponding to a sixth data type or discard the data corresponding to the sixth data type, where the first bit is any bit in the bitmap, and the sixth data type is a data type that is in the at least one data type and that corresponds to the first bit.

Optionally, the processing unit 702 is further configured to determine, based on a life cycle of an artificial intelligence AI model and/or a communication quality monitoring result in the network device, whether to allow the terminal device to send the data corresponding to the at least one data type.

It should be noted that, in the foregoing embodiment of this application, division into the modules is an example, is merely logical function division, and may be other division during actual implementation. In addition, function units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication apparatus shown in FIG. 8, and the communication apparatus may be configured to perform related steps in the foregoing method embodiments. The communication apparatus may be used in the terminal device or the network device in the communication system shown in FIG. 1, may implement the communication method provided in the foregoing embodiments and examples of this application, and has a function of the communication apparatus shown in FIG. 7. Refer to FIG. 8. A communication apparatus 800 includes a communication module 801, a processor 802, and a memory 803. The communication module 801, the processor 802, and the memory 803 are connected to each other.

Optionally, the communication module 801, the processor 802, and the memory 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

The communication module 801 is configured to receive and send data, to implement communication interaction with another device. For example, the communication module 801 may be implemented through a physical interface, a communication module, a communication interface, or an input/output interface.

The processor 802 may be configured to support the communication apparatus 800 in performing the processing action in the foregoing method embodiment. When the communication apparatus 800 is configured to implement the foregoing method embodiments, the processor 802 may be further configured to implement a function of the processing unit 702. The processor 802 may be a CPU, or may be another general-purpose processor, a DSP, an ASIC, an FPGA or another programmable logic device, a transistor logic device, a hardware component, or any combination thereof. The general purpose processor may be a microprocessor or any regular processor or the like.

In an implementation, the communication apparatus 800 is applied to the terminal device in the embodiment of this application shown in FIG. 5. The processor 802 is specifically configured to: send first indication information to the network device through the communication module 801, where the first indication information is used to determine at least one data type, and the at least one data type is a data type of the terminal device; receive second indication information from the network device through the communication module 801, where the second indication information indicates the terminal device whether to send data corresponding to the at least one data type.

In another implementation, the communication apparatus 800 is used in the network device in the embodiment of this application shown in FIG. 5. The processor 802 is specifically configured to: receive first indication information from a terminal device through the communication module 801, where the first indication information is used to determine at least one data type, and the at least one data type is a data type of the terminal device; send second indication information to the terminal device through the communication module 801, where the second indication information indicates the terminal device whether to send data corresponding to the at least one data type.

For a specific function of the processor 802, refer to the descriptions in the communication method provided in the foregoing embodiments and instances of this application, and the specific function descriptions of the communication apparatus 700 in the embodiment of this application shown in FIG. 7. Details are not described herein again.

The memory 803 is configured to store program instructions, data, and the like. Specifically, the program instructions may include program code, and the program code includes computer operation instructions. The memory 803 may include a RAM, and may further include a non-volatile memory (non-volatile memory), for example, at least one magnetic disk storage. The processor 802 executes the program instructions stored in the memory 803, and implements the foregoing function by using the data stored in the memory 803, to implement the communication method provided in the foregoing embodiments of this application.

It may be understood that the memory 803 in FIG. 8 of this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes a processor configured to support a computer apparatus to implement functions related to devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus. In the method, after sending the first indication information to the network device, the terminal device may receive the second indication information from the network device. The first indication information is used to determine at least one data type, and the at least one data type is a data type of the terminal device. The second indication information indicates the terminal device whether to send data corresponding to the at least one data type. According to the method, the terminal device may process, under an indication of the network device, the data corresponding to at least one data type, to improve data processing effectiveness.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, applied to a terminal device and comprising:
sending first indication information to a network device, wherein the first indication information is used to determine at least one data type, and the at least one data type is a data type of the terminal device; and
receiving second indication information from the network device, wherein the second indication information indicates the terminal device whether to send data corresponding to the at least one data type.

2. The method according to claim 1, wherein the sending first indication information to a network device comprises:
sending a buffer status report BSR to the network device, wherein the BSR comprises the first indication information, the first indication information comprises the at least one data type, and the at least one data type corresponds to at least one logical channel group.

3. The method according to claim 2, wherein a first data type is any one of the at least one data type, and the first data type is a data type corresponding to one or more of the at least one logical channel group; or
a second data type is any one of the at least one data type, the second data type is a data type corresponding to a first logical channel, the first logical channel belongs to a first logical channel group, and the first logical channel group is one of the at least one logical channel group.

4. The method according to claim 1, wherein the sending first indication information to a network device comprises:
sending a BSR to the network device, wherein the BSR comprises the first indication information, the first indication information comprises the at least one data type, and the at least one data type corresponds to at least one logical channel.

5. The method according to claim 4, wherein a third data type is any one of the at least one data type, and the third data type is a data type corresponding to one or more of the at least one logical channel.

6. The method according to claim 1, wherein the sending first indication information to a network device comprises:
sending a BSR to the network device, wherein the BSR comprises the first indication information, the first indication information comprises indication information of at least one logical channel group, and the at least one logical channel group corresponds to the at least one data type.

7. The method according to claim 6, wherein a second logical channel group is any one of the at least one logical channel group; and
configuration information of a logical channel in the second logical channel group comprises a fourth data type, or configuration information of the second logical channel group comprises a fourth data type, wherein the fourth data type is a data type that is in the at least one data type and that corresponds to the second logical channel group.

8. The method according to claim 1, wherein the sending first indication information to a network device comprises:
sending a BSR to the network device, wherein the BSR comprises the first indication information, the first indication information comprises indication information of at least one logical channel, and the at least one logical channel corresponds to the at least one data type.

9. The method according to claim 8, wherein a second logical channel is any one of the at least one logical channel, configuration information of the second logical channel comprises a fifth data type, and the fifth data type is a data type that is in the at least one data type and that corresponds to the second logical channel.

10. The method according to any one of claims 1 to 9, wherein the second indication information is a bitmap, and the method further comprises:
determining, based on the bitmap, whether to send the data corresponding to the at least one data type.

11. The method according to claim 10, wherein a quantity of bits comprised in the bitmap is the same as a quantity of the at least one data type; or
a quantity of bits comprised in the bitmap is the same as a quantity of data types comprised in a first data type set, and the first data type set is preconfigured or indicated by the network device.

12. The method according to claim 10 or 11, wherein the determining, based on the bitmap, whether to send the data corresponding to the at least one data type comprises:
determining, based on a value of a first bit, to send data corresponding to a sixth data type or discard the data corresponding to the sixth data type, wherein the first bit is any bit in the bitmap, and the sixth data type is a data type that is in the at least one data type and that corresponds to the first bit.

13. The method according to claim 12, further comprising:
if it is determined, based on the value of the first bit, to discard the data corresponding to the sixth data type, excluding the data corresponding to the sixth data type when logical channel multiplexing is performed on the data.

14. A communication method, applied to a network device and comprising:
receiving first indication information from a terminal device, wherein the first indication information is used to determine at least one data type, and the at least one data type is a data type of the terminal device; and
sending second indication information to the terminal device, wherein the second indication information indicates the terminal device whether to send data corresponding to the at least one data type.

15. The method according to claim 14, wherein the receiving first indication information from a terminal device comprises:
receiving a buffer status report BSR from the terminal device, wherein the BSR comprises the first indication information, the first indication information comprises the at least one data type, and the at least one data type corresponds to at least one logical channel group.

16. The method according to claim 15, wherein a first data type is any one of the at least one data type, and the first data type is a data type corresponding to one or more of the at least one logical channel group; or
a second data type is any one of the at least one data type, the second data type is a data type corresponding to a first logical channel, the first logical channel belongs to a first logical channel group, and the first logical channel group is one of the at least one logical channel group.

17. The method according to claim 14, wherein the receiving first indication information from a terminal device comprises:
receiving a BSR from the terminal device, wherein the BSR comprises the first indication information, the first indication information comprises the at least one data type, and the at least one data type corresponds to at least one logical channel.

18. The method according to claim 17, wherein a third data type is any one of the at least one data type, and the third data type is a data type corresponding to one or more of the at least one logical channel.

19. The method according to claim 14, wherein the receiving first indication information from a terminal device comprises:
receiving a BSR from the terminal device, wherein the BSR comprises the first indication information, the first indication information comprises indication information of at least one logical channel group, and the at least one logical channel group corresponds to the at least one data type.

20. The method according to claim 19, wherein a second logical channel group is any one of the at least one logical channel group; and
configuration information of a logical channel in the second logical channel group comprises a fourth data type, or configuration information of the second logical channel group comprises a fourth data type, wherein the fourth data type is a data type that is in the at least one data type and that corresponds to the second logical channel group.

21. The method according to claim 14, wherein the receiving first indication information from a terminal device comprises:
receiving a BSR from the terminal device, wherein the BSR comprises the first indication information, the first indication information comprises indication information of at least one logical channel, and the at least one logical channel corresponds to the at least one data type.

22. The method according to claim 21, wherein a second logical channel is any one of the at least one logical channel, configuration information of the second logical channel comprises a fifth data type, and the fifth data type is a data type that is in the at least one data type and that corresponds to the second logical channel.

23. The method according to any one of claims 14 to 22, wherein the second indication information is a bitmap.

24. The method according to claim 23, wherein a quantity of bits comprised in the bitmap is the same as a quantity of the at least one data type; or
a quantity of bits comprised in the bitmap is the same as a quantity of data types comprised in a first data type set, and the first data type set is preconfigured or indicated by the network device.

25. The method according to claim 23 or 24, wherein a value of a first bit is used to determine to send data corresponding to a sixth data type or discard the data corresponding to the sixth data type, the first bit is any bit in the bitmap, and the sixth data type is a data type that is in the at least one data type and that corresponds to the first bit.

26. The method according to any one of claims 14 to 25, further comprising:
determining, based on a life cycle of an artificial intelligence AI model and/or a communication quality monitoring result in the network device, whether to allow the terminal device to send the data corresponding to the at least one data type.

27. A communication apparatus, comprising:
a communication unit, configured to receive and send data; and
a processing unit, configured to perform the method according to any one of claims 1 to 13 or claims 14 to 26 by using the communication unit.

28. A communication system, comprising:
a terminal device, configured to implement the method according to any one of claims 1 to 13; and
a network device, configured to implement the method according to any one of claims 14 to 26.

29. A computer-readable storage medium, wherein the computer-readable storage medium stores a computer program, and when the computer program is run on a computer, the computer is enabled to perform the method according to any one of claims 1 to 13 or claims 14 to 26.

30. A chip, wherein the chip is coupled to a memory, and the chip reads a computer program stored in the memory to perform the method according to any one of claims 1 to 13 or claims 14 to 26.
